# FASCICULE DE BREVET EUROPEEN

(11) **EP 4 196 635 B1**
(45) Date de publication et mention de la délivrance du brevet: **04.12.2024**
(21) Numéro de dépôt: 20757871.7
(22) Date de dépôt: 13.08.2020
(51) Int. Cl.: D21H 17/14, C08B 11/12, D21H 21/16, D21H 25/06

(54) **PROCÉDÉ D'ACYLATION D'UN MATÉRIAU SOLIDE HYDROXYLÉ**
VERFAHREN ZUR ACYLIERUNG EINES HYDROXYLIERTEN FESTEN MATERIALS
METHOD FOR ACYLATING A HYDROXYLATED SOLID MATERIAL

(43) Date de publication de la demande: 21.06.2023
(73) Titulaire: Cellulotech Inc., Victoria BC V8V 5B1 (CA)
(72) Inventeur: SAMAIN, Daniel, 31500 TOULOUSE (FR)
(74) Mandataire: BARRE LAFORGUE
(86) Numéro de dépôt international: PCT/EP2020/072818
(87) Numéro de publication internationale: WO 2022/033698

(56) Documents cités:
- WO-A1-2017/002005
- FR-A1- 2 967 363
- US-A1- 2017 241 080

## Description

L'invention concerne un procédé perfectionné d'acylation par synthèse chromatogénique d'un matériau solide porteur de groupes hydroxyles (-OH), dits hydroxyles réactogènes, accessibles et susceptibles de pouvoir réagir avec un chlorure d'acide gras à l'état gazeux. L'invention concerne donc un tel procédé perfectionné permettant de transformer un tel matériau solide, qui est hydrophile du fait desdits hydroxyles réactogènes, notamment du fait desdits hydroxyles réactogènes de surface, en un matériau hydrophobe conservant sensiblement la porosité du matériau solide hydrophile. L'invention concerne un procédé perfectionné d'acylation d'un tel matériau solide sous forme d'une feuille -notamment plane- poreuse ou non poreuse. L'invention concerne en particulier un procédé perfectionné d'acylation d'un tel matériau solde sous forme d'une feuille de papier constitué, pour l'essentiel, de fibres de cellulose, perméable aux gaz et perméable aux liquides aqueux en une feuille de papier acylé, perméable aux gaz et de perméabilité aux liquides aqueux sensiblement diminuée par rapport à la feuille de papier de départ. L'invention concerne donc plus particulièrement un procédé d'acylation et d'imperméabilisation vis-à-vis de compositions liquides aqueuses, d'une feuille de papier, d'une bande de papier ou d'une laize de papier. En particulier, l'invention concerne un tel procédé perfectionné d'acylation permettant de produire un papier acylé qui soit perméable à l'air et imperméable vis-à-vis d'excrétions aqueuses liquides humaines buccales, nasales et/ou oculaires et en particulier vis-à-vis de telles excrétions aqueuses vectrices de microorganismes pathogènes et, en particulier, vectrices de particules virales infectieuses-. Plus particulièrement, l'invention concerne un tel procédé d'acylation d'un matériau papier perméable aux gaz et perméable aux liquides aqueux en un matériau papier acylé de décontamination par filtration d'un flux d'air respiratoire. L'invention s'étend aussi à un tel matériau papier acylé susceptible d'être obtenu par un procédé selon l'invention.

L'invention concerne un procédé d'acylation d'un tel matériau solide -notamment d'un matériau souple et susceptible de pouvoir s'étendre au moins en partie dans un plan- porteur de tels hydroxyles réactogènes et susceptible de pouvoir être mis en oeuvre à l'échelle artisanale, c'est-à-dire pour une préparation individuelle en petite série.

Cependant, l'invention concerne également un procédé d'acylation d'un matériau solide -notamment d'un matériau souple et susceptible de pouvoir s'étendre au moins en partie dans un plan- porteur de tels hydroxyles réactogènes et susceptible de pouvoir être mis en oeuvre à l'échelle industrielle, c'est-à-dire pour l'acylation d'une bande (ou laize) de matériau solide porteur de tels hydroxyles réactogènes, en défilement selon l'axe principal de la bande de matériau.

On connait la réaction chromatogénique d'acylation d'un matériau solide porteur de tels hydroxyles réactogènes dans laquelle un chlorure d'acide gras à longue chaine à l'état gazeux réagit avec un hydroxyle réactogène de surface du matériau solide et forme un groupement ester entre le matériau solide et une chaine grasse hydrocarbonée (R) du chlorure d'acide gras, selon l'équation (I) suivante :

Matériau-OH + R-CO-Cℓ ⇆ Matériau-O-CO-R + HCℓ (I).

On connait en particulier l'application de la réaction chromatogénique à un matériau cellulosique comprenant des fibres de cellulose porteuses de tels hydroxyles réactogènes. L'engagement d'au moins une partie de tels hydroxyles réactogènes de fibres de cellulose dans des liaisons ester covalentes avec des chaines grasses hydrocarbonées (R) permet d'augmenter l'hydrophobie des fibres de cellulose et de rendre des matériaux cellulosiques, tels que le papier, ainsi acylés sensiblement imperméables à l'eau.

La réaction chromatogénique se produit entre le matériau solide porteur de tels hydroxyles réactogènes et le chlorure d'acide gras à l'état gazeux à la pression partielle saturante. Elle permet de sursoir à l'utilisation de tout solvant organique, le chlorure d'acide étant réactif à l'état gazeux. Elle se produit par chauffage modéré du chlorure d'acide gras à une température inférieure à sa température d'ébullition à pression atmosphérique. Elle permet aussi de sursoir à l'utilisation d'un catalyseur devant nécessairement être éliminé en fin de réaction. La réaction chromatogénique est en outre favorisée par le fait que l'acide chlorhydrique (HCℓ) gazeux formé est entrainé par un flux d'air chaud appliqué sur le matériau solide. Cet entrainement de l'acide chlorhydrique gazeux permet de limiter -voire d'empêcher totalement- l'hydrolyse de l'ester formé et surtout de déplacer l'équilibre de réaction dans le sens de l'acylation.

Un procédé d'acylation d'un tel matériau solide porteur de tels hydroxyles réactogènes, mis en oeuvre à l'échelle d'un laboratoire est décrit dans WO99/08784. Dans un tel procédé, une pièce de papier filtre « *Whatman n°2 »* est imprégnée d'une solution de chlorure d'acide gras dans le pentane anhydre. La pièce de papier filtre est ensuite placée sous une hotte aspirante à température ambiante de façon à éliminer le pentane par évaporation, puis dans une étuve ventilée portée à la température de 150°C. Une telle imprégnation permet une mise en contact optimale des fibres de cellulose de la feuille de papier et du chlorure d'acide gras, et une acylation de l'ensemble desdits hydroxyles réactogènes présents sur la pièce de papier filtre. La pièce de papier filtre ainsi acylée présente une excellente hydrophobie, telle que révélée par ses propriétés de déperlance. Cela étant, le procédé est difficile à mettre en oeuvre en pratique. L'évaporation spontanée du pentane et le refroidissement qui en résulte conduisent à une condensation de l'humidité de l'air sur le papier filtre, s'ajoutant à l'humidité naturelle du papier. Il est donc essentiel de déshydrater le papier par équilibrage à 105°C pendant 24 heures et de mettre la réaction en oeuvre dans des conditions de faible humidité, par exemple dans une atmosphère d'air conditionné. Dans ces conditions, des propriétés hydrophobes remarquables sont obtenues en utilisant une quantité de chlorure d'acide gras de l'ordre de 0,1% par rapport au poids du papier. Dans de telles conditions, un rendement de greffage de 50% est obtenu en utilisant le chlorure d'acide stéarique. Rien n'empêche de pallier le problème d'humidité en augmentant la quantité de chlorure d'acide stéarique de façon à apporter une quantité sacrificielle de chlorure d'acide stéarique. Une telle approche n'est cependant pas satisfaisante dès lors qu'elle conduit à la formation d'acide stéarique libre à propriétés amphiphiles. Une telle approche nécessite également d'éliminer le chlorure d'acide stéarique en excès en fin de réaction. En effet, un excès de chlorure d'acide stéarique résiduel pose problème. Il est susceptible d'être hydrolysé et de produire de l'acide gras libre et de l'acide chlorhydrique (HCℓ). La présence d'HCℓ fragilise le papier par hydrolyse de liaisons glycosidiques de la cellulose. Les acides gras libres quant à eux tendent à diminuer l'hydrophobie du papier du fait de leurs propriétés tensioactives. Des solutions pour maintenir une qualité du greffage et des propriétés d'hydrophobie optimales en limitant la formation d'humidité et en limitant -voire en supprimant complètement- la quantité d'acides et de chlorures d'acide gras libres résiduels sont donc recherchées.

En outre, le procédé décrit dans WO99/08784 implique nécessairement d'utiliser une solution de chlorure d'acide gras dans un milieu solvant apolaire du type pentane, hexane, éther de pétrole qui sont des solvants qui peuvent être toxiques pour l'homme et/ou pour l'environnement. Le pentane étant très volatil pose évidemment le problème de sa forte inflammabilité qui le rend en pratique inutilisable, notamment à l'échelle industrielle.

Une solution visant à pallier au moins une partie de ces inconvénients est de remplacer le pentane très volatil par un solvant apolaire moins volatil, tel que l'éther de pétrole 100/150. Cependant, si l'évaporation d'éther de pétrole 100/150 ne s'accompagne pas d'une condensation significative d'humidité, en revanche, une fraction de cet éther de pétrole 100/150 reste nécessairement piégée au contact des fibres de cellulose du matériau papier. L'inventeur a en effet constaté que l'élimination d'éther de pétrole 100/150 par évaporation à 150°C est lente et incomplète. Il a visualisé la présence résiduelle d'éther de pétrole 100/150 par la survenue d'un brouillard de condensation formé lors de l'ouverture d'une étuve renfermant un papier filtre imprégné d'éther de pétrole 100/150 et chauffée à 150°C. Il pense que ce brouillard de condensation est provoqué par le mélange de l'air chaud de l'étuve et de l'air froid extérieur, et son refroidissement. Un excès de chlorure d'acide gras peut également être révélée par la formation d'un tel brouillard de condensation. En outre, l'inventeur a constaté que la réaction chromatogénique elle-même est affectée par la présence de résidus d'éther de pétrole 100/150. En effet, pour obtenir une valeur d'angle de contact de l'ordre de 150° il est nécessaire d'utiliser une quantité de chlorure d'acide gras au moins cinq fois plus élevée que la quantité de chlorure d'acide gras nécessaire pour aboutir à ce résultat avec une solution de chlorure d'acide gras dans le pentane en proportion massique de 0,1%. L'inventeur suppose que la présence de ces fractions résiduelles d'éther de pétrole 100/150 ralentit la réaction en maintenant le chlorure d'acide gras à l'état au moins pour partie solvaté et en ne permettant pas une diminution de l'énergie d'activation de la réaction. Des concentrations plus élevées en réactif seraient alors indispensables. La présence de telles fractions résiduelles d'éther de pétrole 100/150 est aussi susceptible de conduire à une acylation des fibres en profondeur du matériau papier.

Cette méthode d'acylation par imprégnation d'une solution d'un chlorure d'acide gras dans l'éther de pétrole 100/150 est décrite dans FR2925910 pour le traitement de papiers revêtus d'une couche d'alcool polyvinylique (PVA). Cette méthode d'acylation utilisant un chlorure d'acide gras en solution dans l'éther de pétrole permet de rendre la couche de PVA hydrophobe, mais l'inventeur a trouvé qu'un meilleur résultat d'hydrophobie pouvait être obtenu avec une méthode d'imprégnation par le pentane avec une moindre concentration en chlorure d'acide gras. Ces méthodes de traitement par imprégnation sont par ailleurs inadaptées au traitement d'un papier couché non poreux, dès lors qu'il est souhaitable de ne déposer le chlorure d'acide gras que du côté couché et non d'imprégner inutilement la totalité du papier.

L'invention vise donc à pallier ces inconvénients.

En particulier, l'invention vise à proposer un procédé d'acylation d'un matériau solide porteur d'hydroxyles réactogènes permettant d'obtenir un matériau acylé d'hydrophobie importante et qui soit sensiblement exempt de chlorure d'acide gras et d'acide gras résiduels. L'invention vise donc à proposer un tel procédé qui soit simplifié dès lors qu'il ne nécessite pas d'éliminer du chlorure d'acide gras excédentaire résiduel.

L'invention vise aussi à proposer un tel procédé qui soit plus économe en énergie que les procédés d'acylation connus dès lors qu'il ne nécessite pas l'établissement d'un flux d'air chaud d'élimination de ce chlorure d'acide gras excédentaire.

En outre, l'invention vise à proposer un tel procédé qui est économique en cela qu'il permet de diminuer la quantité de chlorure d'acide gras à appliquer sur le matériau papier, pour une hydrophobie au moins égale voire augmentée par rapport à un matériau papier obtenu par un procédé d'acylation connu.

Un procédé d'acylation d'un substrat hydroxylé susceptible d'être mis en oeuvre à l'échelle industrielle est décrit dans FR2967363. FR2967363 décrit l'acylation en continu d'une laize d'un matériau cellulosique tel que du papier ou du carton, entraîné en défilement entre un dévidoir et un dispositif de rembobinage d'une laize de matériau cellulosique acylé. Le problème résolu par FR2967363 est de permettre un dépôt de chlorure d'acide gras en surface d'un matériau cellulosique en déplacement. La solution de FR2967363 consiste à déposer le chlorure d'acide gras au contact du matériau cellulosique en déplacement, par une technique d'impression puis de chauffer le dépôt par contact avec un rouleau chauffant. Dans le procédé de FR2967363, le chlorure d'acide gras est déposé en surface du matériau cellulosique en défilement sous la forme d'une pluralité d'amas correspondants aux cellules d'un rouleau anilox d'un dispositif d'impression par flexographie ou par héliographie.

Les dispositifs de dépose par flexographie et par héliographie sont adaptés aux techniques d'impression et l'inventeur a constaté que même s'ils fonctionnent partiellement, ils ne sont pas optimisés aux fins de la réaction chromatogénique. En raison de la taille minimale des cellules d'un rouleau anilox, il n'est pas possible de limiter suffisamment la quantité de chlorure d'acide gras déposée sur le matériau cellulosique à la quantité de chlorure d'acide gras requise par la chromatogénie. Dès lors, la mise en oeuvre du procédé de FR2967363 provoque l'apparition d'un brouillard de condensation se formant au-dessus du matériau cellulosique porté à haute température sur le rouleau chauffant, ce brouillard de condensation caractérisant l'excès de chlorure d'acide déposé sur le matériau cellulosique. Par ailleurs, l'inventeur a constaté que la mise en oeuvre du procédé de FR2967363 conduit systématiquement à un matériau cellulosique acylé présentant une valeur d'hydrophobie inférieure à celle qui peut être obtenue par imprégnation avec une solution de chlorure d'acide gras dans le pentane réalisée en conditions d'humidité atmosphérique contrôlées. Non seulement, la quantité de chlorure d'acide gras déposé est excessive, mais cette quantité n'est pas déposée de façon homogène sur toute la surface spécifique du matériau cellulosique. Elle est déposée au contraire sous la forme d'amas discrets, chaque amas correspondant à un pixel d'impression. Contrairement à la méthode d'imprégnation par une solution de pentane qui conduit à un dépôt sensiblement homogène d'une monocouche de chlorure d'acide gras en surface du papier filtre, ces amas sont formés d'un grand nombre de molécules, présentent une surface spécifique faible peu favorable au déplacement de l'équilibre liquide/vapeur vers la forme gazeuse. De tels amas nécessitent pour ce déplacement d'appliquer une température plus élevée qui nuit en réalité à la condensation/évaporation caractéristique de la chromatogénie. Les valeurs d'hydrophobie obtenues ne sont donc pas optimales. L'hydrophobie du matériau cellulosique acylé ainsi obtenu ne permet pas de lui conférer une imperméabilité à l'eau optimale et suffisamment durable dans le temps. À cet égard, la valeur de l'angle de contact d'une goutte d'eau pure déposée sur un matériau cellulosique acylé selon le procédé de FR2967363 est certes supérieure à 90°, mais cette valeur n'atteint pas la valeur optimale de 150°. Il a aussi observé que ce matériau cellulosique acylé contient une proportion importante d'acides gras libres contribuant à la dégradation de ses propriétés d'hydrophobie et d'imperméabilité à l'eau.

L'inventeur suppose également que le dépôt de chlorure d'acide gras déposé sous la forme de tels amas (FR2967363) conduit à la formation d'une couche grasse non liée au matériau cellulosique, piégeant l'eau contenue dans le volume du matériau cellulosique et s'opposant à son élimination. Il en résulterait une hydrolyse non souhaitée du chlorure d'acide gras. Le fait également d'utiliser un excès de chlorure d'acide gras conduit à une accumulation d'impuretés volatiles associées au chlorure d'acide gras -par exemple des acides gras libres- qui sont très peu volatils et risquent de s'accumuler sur le matériau cellulosique.

Concernant le traitement d'un matériau cellulosique étanche aux gaz et dont on souhaite ne traiter qu'une seule des deux faces principales, le procédé de FR2967363 semble être plus adapté que le procédé d'imprégnation au pentane, le chlorure d'acide gras pouvant n'être déposé que sur une seule des deux faces du matériau cellulosique. Toutefois, la quantité de chlorure d'acide gras déposé par une méthode d'impression est excessive et répartie de façon discontinue. Les propriétés d'hydrophobie obtenues sont inférieures à celles obtenues avec la méthode d'imprégnation au pentane.

Il n'existe donc pas de méthode performante de dépôt de chlorure d'acide gras sur un matériau cellulosique permettant d'obtenir un matériau acylé dont les performances en termes d'hydrophobie sont satisfaisantes.

L'invention vise donc à pallier ces inconvénients.

L'invention vise en particulier à proposer un procédé artisanal d'acylation d'un matériau solide porteur d'hydroxyles réactogènes qui est amélioré par rapport au procédé de WO99/08784 par imprégnation d'une solution d'un chlorure d'acide gras dans le pentane.

L'invention vise aussi à proposer un tel procédé artisanal d'acylation sans solvant permettant de traiter individuellement une pièce d'un matériau solide porteur d'hydroxyles réactogènes -notamment d'un matériau cellulosique et en particulier d'un matériau papier- avec une efficacité de greffage au moins égale voire améliorée par rapport à l'efficacité de greffage du procédé de WO99/08784.

L'invention vise aussi à proposer un tel procédé artisanal d'acylation qui ne nécessite pas d'utiliser un solvant organique toxique pour l'environnement.

L'invention vise aussi à proposer un tel procédé artisanal d'acylation qui ne nécessite pas d'utiliser un solvant organique apolaire, quelle que soit sa volatilité.

L'invention vise aussi à proposer un tel procédé artisanal d'acylation qui soit susceptible d'être mis en oeuvre par tout individu avec des moyens couramment accessibles.

L'invention vise aussi à proposer un tel procédé artisanal d'acylation d'un matériau cellulosique -notamment d'un matériau papier- pour la fabrication individuelle d'un dispositif de protection par filtration, perméable aux gaz -notamment perméable à l'air atmosphérique- et imperméable aux liquides aqueux.

En particulier, l'invention vise à proposer un tel procédé artisanal d'acylation d'un matériau papier pour la fabrication d'un masque de protection vis-à-vis de microorganismes (bactéries, champignons, virus) pathogènes.

Mais l'invention vise également à proposer un procédé industriel d'acylation d'une bande ou laize de matériau solide porteur d'hydroxyles réactogènes -notamment d'un matériau cellulosique et en particulier d'un matériau papier- en défilement.

L'invention vise en particulier à proposer un tel procédé industriel d'acylation d'efficacité améliorée par rapport à l'efficacité du procédé de FR2967363.

L'invention vise aussi à proposer un tel procédé industriel d'acylation qui est simplifié par rapport au procédé de FR2967363.

L'invention vise donc à proposer un tel procédé industriel d'acylation qui soit compatible avec les contraintes techniques relatives à la vitesse de défilement du matériau solide porteur d'hydroxyles réactogènes -notamment du matériau cellulosique et en particulier du matériau papier- et à une cadence élevée de production d'un tel matériau solide acylé.

L'invention vise aussi à proposer un tel procédé industriel d'acylation d'une bande de matériau cellulosique, notamment de matériau papier, pour la fabrication de dispositifs de protection par filtration, perméables aux gaz -notamment perméables à l'air atmosphérique- et imperméables aux liquides aqueux.

En particulier, l'invention vise à proposer un tel procédé industriel d'acylation pour la fabrication de masques de protection vis-à-vis de microorganismes (bactéries, champignons, virus) pathogènes.

Ainsi, l'invention concerne un procédé d'acylation d'un matériau solide porteur d'hydroxyles (-OH), dits hydroxyles réactogènes, accessibles et susceptibles de pouvoir réagir avec un chlorure d'acide gras à l'état gazeux, dans lequel :
- on répartit au moins en surface dudit matériau solide -et le cas échéant en profondeur sur au moins une partie d'épaisseur dudit matériau solide- au moins un chlorure d'acide gras au moyen d'un dispositif répartiteur présentant une surface applicatrice apte à déposer dudit au moins un chlorure d'acide gras au moins en surface dudit matériau solide à partir de ladite surface applicatrice ;
- on chauffe ledit au moins un chlorure d'acide gras réparti au moins en surface dudit matériau solide, à une température, dite température d'acylation, inférieure à la température de vaporisation d'au moins un -notamment de chaque- chlorure d'acide gras, de façon à permettre une acylation dudit matériau solide par réaction d'au moins un chlorure d'acide gras à l'état gazeux sur au moins un desdits hydroxyles réactogènes dudit matériau solide ;
- on dirige un flux d'une composition gazeuse -notamment un flux de composition gazeuse inerte -air atmosphérique, gaz rare- vis-à-vis de l'acylation- sur ledit matériau solide à ladite température d'acylation, de façon à entrainer à distance dudit matériau solide au moins une partie d'acide chlorhydrique gazeux formé du fait de la réaction d'acylation ;
caractérisé en ce que la surface applicatrice du dispositif répartiteur est un velours pourvu d'éléments filiformes de velours, non réactifs vis-à-vis dudit au moins un chlorure d'acide gras et aptes à pouvoir :
∘ se charger dudit au moins un chlorure d'acide gras par contact avec ledit au moins un chlorure d'acide gras, et ;
∘ libérer dudit au moins un chlorure d'acide gras par contact des éléments filiformes du velours avec ledit matériau solide ;
l'étape de répartition étant réalisée de façon à répartir sur ledit matériau solide une quantité dudit au moins un chlorure d'acide gras comprise entre 20 mg/m² et 1 g/m² de surface dudit matériau solide.

Un tel matériau solide porteur de groupes hydroxyles (-OH), dits hydroxyles réactogènes, accessibles et susceptibles de pouvoir réagir avec un chlorure d'acide gras à l'état gazeux peut être un matériau cellulosique. Il peut s'agir d'un matériau papier ou carton. Dans certains modes de réalisation, ledit matériau solide peut être un tissu. Avantageusement, ledit matériau solide présente un état de surface irrégulier et de grande rugosité. Un tel matériau solide peut être poreux ou non poreux. Rien n'empêche cependant que ledit matériau solide soit un matériau papier calandré présentant un état de surface régulier et de faible rugosité. Il peut aussi s'agir d'un matériau solide non poreux présentant des hydroxyles réactogènes portés par au moins un polymère porteur de tels hydroxyles réactogènes. Un tel polymère peut être le PVA (alcool polyvinylique). Dans certains modes de réalisation, ledit matériau solide présente une couche de surface extérieure formée d'alcool polyvinylique. En particulier, il peut s'agir d'un matériau cellulosique, en particulier un matériau papier, rendu étanche à l'air et non poreux par application surfacique d'une couche de PVA, tel que décrit dans FR2925910.

L'inventeur a découvert que le procédé selon l'invention permet de déposer au moins en surface dudit matériau solide, c'est-à-dire en surface et le cas échéant sur au moins une partie d'épaisseur dudit matériau solide -notamment lorsque ledit matériau solide est poreux et/ou présente une surface irrégulière-, une quantité d'au moins un chlorure d'acide gras au moins équivalente aux -voire plus faible que les- quantités les plus basses de chlorure d'acide gras déposées lors de la mise en oeuvre du procédé par imprégnation d'une solution de chlorure d'acide gras dans le pentane (WO99/08784) et en conduisant à des propriétés d'hydrophobie -notamment à des propriétés d'hydrophobie telles que quantifiées par la mesure de l'indice de Cobb et/ou par la mesure de l'angle de contact formé par une goutte d'eau déposée en surface dudit matériau solide acylé et/ou par le test d'étanchéité d'une poche d'eau-sensiblement équivalentes, voire même améliorées.

L'inventeur a d'ailleurs découvert que les conditions réactionnelles des procédés connus d'acylation chromatogénique d'un matériau solide utilisant de l'éther de pétrole 100/150 ou une dépose de chlorure d'acide gras sensiblement pur par flexographie ou héliographie ne sont pas optimales et mettent en oeuvre du chlorure d'acide gras en excès par rapport au matériau solide, de sorte que le matériau solide traité par ces procédés connus renferme une quantité résiduelle significative de chlorure d'acide gras libre. Il a découvert que le matériau solide traité par ces procédés connus renferme une quantité résiduelle de chlorure d'acide gras, malgré la mise en oeuvre d'une étape finale de soufflage (ou *« flushing* ») destinée à éliminer tout reste de chlorure d'acide gras. La présence de chlorure d'acide gras résiduel pose le problème de l'élimination de ce reste de chlorure d'acide gras. En effet, un tel chlorure d'acide gras libre résiduel peut se décomposer par hydrolyse sous forme d'acide gras libre et d'acide chlorhydrique susceptible de dégrader le matériau solide. En outre, ces chlorures d'acide gras résiduels réactifs constituent un problème de toxicité pour des applications en emballage alimentaire et dans le domaine biomédical.

Par ailleurs, le fait que les propriétés d'hydrophobie d'un matériau papier traité par des procédés connus d'imprégnation par l'éther de pétrole 100/150 et par application au moyen d'un rouleau anilox soient plus faibles que celles espérées, inciterait à augmenter la quantité de chlorure d'acide gras déposée sur ledit matériau solide aux fins d'augmenter le taux de greffage. Or, l'inventeur s'est rendu compte que ce n'est pas tant la quantité totale de chlorure d'acide gras déposé sur ledit matériau solide qui importe, mais bien la répartition et l'étalement aussi homogène que possible de ce chlorure d'acide gras sur toute la surface et le cas échéant en profondeur dudit matériau solide -notamment lorsque ledit matériau solide est poreux et/ou présente une surface irrégulière-, et l'absence de solvant résiduel. En réalité, selon l'invention, le fait de déposer une quantité limitée de chlorure d'acide gras sur ledit matériau solide permet, tout en améliorant les propriétés d'hydrophobie, de diminuer, voire de supprimer, la quantité de chlorure d'acide gras résiduel, améliorant le rendement économique de la réaction et évitant la mise en oeuvre complexe d'un traitement d'élimination du chlorure d'acide en excès. Le fait de diminuer, voire de supprimer, l'excès de chlorure d'acide gras permet de diminuer, voire de supprimer, l'acide gras libre susceptible d'être produit par hydrolyse et qui ne peut pas être éliminé par soufflage d'air chaud. Le procédé selon l'invention est donc simplifié, plus efficace et plus économique que les procédés connus.

L'inventeur a observé que, de manière tout à fait surprenante et inattendue, il est possible de répartir de manière régulière, reproductible et homogène une quantité faible de chlorure d'acide gras en surface dudit matériau solide en utilisant un dispositif répartiteur présentant une surface applicatrice formée d'un velours pourvu d'éléments filiformes du velours. De façon encore plus surprenante, ces quantités faibles de chlorure d'acide gras sont cependant suffisantes pour permettent de conférer au matériau solide une hydrophobie, une étanchéité aux liquides aqueux et une déperlance au moins égales, voire généralement supérieure à l'hydrophobie, l'étanchéité et la déperlance d'un matériau solide acylé obtenu par un procédé connu, notamment par un procédé par imprégnation d'une solution de chlorure d'acide gras dans le pentane (WO99/08784).

À titre de comparaison, l'inventeur a observé que l'utilisation d'un dispositif répartiteur présentant une surface applicatrice formée d'une mousse exempte d'éléments filiformes (qui ne constitue donc pas l'invention) ne permet pas d'obtenir de telles propriétés avec la même quantité de chlorure d'acide gras. Une telle mousse est certes déformable à l'échelle macroscopique, mais présente à l'échelle microscopique une forte cohésion et une faible capacité de déformation qui ne permettent pas un contact étroit avec toutes les micro-irrégularités de surface dudit matériau solide, comme peuvent le faire les éléments filiformes d'un velours. La mousse chargée en chlorure d'acide gras adhère au matériau solide, ne présente pas l'effet glissant du velours et son utilisation à l'échelle industrielle est délicate voire impossible.

Dans certains modes de réalisation d'un procédé selon l'invention, ledit matériau solide étant un matériau solide poreux, on répartit au moins en surface dudit matériau solide poreux et en profondeur sur au moins une partie d'épaisseur dudit matériau solide poreux, au moins un chlorure d'acide gras au moyen du dispositif répartiteur. L'étape de répartition est réalisée de façon à former sur ledit matériau solide un dépôt dudit au moins un chlorure d'acide gras le plus étalé possible -et de plus faible épaisseur possible compte tenu des quantités déposées- au contact desdits hydroxyles réactogènes du matériau solide. Cet étalement et cette faible épaisseur du dépôt favorisent l'état gazeux du chlorure d'acide gras. La réaction d'acylation par chromatogénie se développe alors efficacement.

Dans certains modes de réalisation selon l'invention, le dispositif répartiteur présente une surface applicatrice formée d'un velours pourvu d'éléments filiformes de velours oléophiles (présentant de l'affinité pour les corps gras). Rien n'empêche cependant que, dans d'autres modes de réalisation selon l'invention, le dispositif répartiteur présente une surface applicatrice formée d'un velours pourvu d'éléments filiformes de velours oléophobes. En particulier il peut s'agir d'éléments filiformes de velours enduits d'un revêtement perfluoré, notamment de téflon^{®}. De façon surprenante, l'inventeur a observé que de tels éléments filiformes de velours oléophobes se chargent, malgré leur oléophobie, de chlorure d'acide gras qui sont de nature lipidique et oléophiles. La quantité de chlorure d'acide gras chargé est certes faible mais elle est suffisante pour permettre un dépôt et une répartition de chlorure d'acide gras sur le matériau solide et son hydrophobisation.

Selon l'invention, la surface applicatrice du rouleau applicateur est formée d'un matériau chimiquement stable et résistant à l'abrasion et à la température. Tout type de matériau lipophile adapté peut être utilisé. Avantageusement, le rouleau applicateur est du type « rouleau laqueur ».

Dans certains modes de réalisation d'un procédé selon l'invention, on réalise l'étape de répartition à une température comprise entre 40°C et 190°C. Dans certains modes de réalisation d'un procédé selon l'invention, rien n'empêche d'effectuer le dépôt et la répartition dudit au moins un chlorure d'acide gras sur un matériau solide préalablement chauffé pour atteindre ladite température d'acylation. On observe que la réaction d'acylation se déroule de façon quasi instantanée lors de la répartition dudit au moins un chlorure d'acide gras. Rien n'empêche, dans certains modes de réalisation d'un procédé d'acylation selon l'invention -notamment dans certains modes de réalisation dans lesquels le matériau solide présente un taux d'humidité élevé- de chauffer le matériau solide préalablement au dépôt dudit au moins un chlorure d'acide gras ou préalablement à l'étape de répartition.

Avantageusement, les éléments filiformes de velours sont souples et adaptés pour pouvoir se charger dudit au moins un chlorure d'acide gras et pour pouvoir libérer au moins une partie dudit au moins un chlorure d'acide gras chargé sur les éléments filiformes de velours en surface et éventuellement sur au moins une partie d'épaisseur dudit matériau solide, par déformation élastique des éléments filiformes de velours souples chargés.

Dans certains modes de réalisation, les éléments filiformes de velours sont formés d'au moins un matériau choisi dans le groupe formé des fibres de kératine -notamment des fibres de laine, en particulier de laine mohair-, des fibres aramides, des fibres polyester, des fibres polyamides, des fibres acryliques, des fibres fluorées -notamment perfluorées-, des fibres munies d'un revêtement fluoré -notamment perfluoré-, des microfibres -notamment des microfibres de masse linéique inférieure à 1 g/ 10 km (1 décitex)-, des microfibres tissées, des super-microfibres dont le titre est inférieur à 0,4 décitex et aussi des ultra-microfibres dont le titre est inférieur à 0,1 décitex. Avantageusement, les éléments filiformes de velours sont choisis pour leur inertie chimique et pour leur résistance élevée à la chaleur et à l'abrasion. Dans certains modes de réalisation, les éléments filiformes de velours présentent une longueur comprise entre 1 mm et 10 mm, notamment comprise entre 2 mm et 6 mm, de préférence de l'ordre de 4 mm. Dans certains modes de réalisation, les éléments filiformes de velours présentent une section droite transversale de diamètre compris entre 1 µm et 100 µm. Dans certains modes de réalisation d'un procédé d'acylation selon l'invention, les éléments filiformes de velours présentent une densité d'implantation en surface du rouleau applicateur comprise entre 10 éléments filiformes par mm² de surface du rouleau applicateur et 500 éléments filiformes par mm² de surface du rouleau applicateur. Les éléments filiformes de velours sont choisis pour présenter -notamment lors de la mise en rotation du rouleau applicateur- une rigidité conférée du fait de la rotation du rouleau applicateur, qui est suffisante pour permettre l'application dudit au moins un chlorure d'acide gras en profondeur sur au moins une partie d'épaisseur dudit matériau solide, notamment dudit matériau solide poreux, sans toutefois endommager ledit matériau solide. Avantageusement, selon tous les modes de réalisation d'un procédé selon l'invention, les éléments filiformes de velours présentent une flexibilité choisie pour ne pas endommager ledit matériau solide par contact avec ledit matériau solide.

Dans certains modes de réalisation d'un procédé selon l'invention, on répartit ledit au moins un chlorure d'acide gras au moins en surface dudit matériau solide par effleurement d'extrémités longitudinales libres des éléments filiformes de velours de la surface applicatrice sur la surface dudit matériau solide. En particulier, on répartit ledit au moins un chlorure d'acide gras au moins en surface du matériau solide par déplacement relatif de la surface applicatrice du dispositif répartiteur et du matériau solide de façon que les extrémités libres de éléments filiformes de velours soient au contact dudit matériau solide au moins en surface dudit matériau solide et de préférence au contact d'au moins une partie d'épaisseur du matériau solide -notamment lorsque celui-ci est poreux- de façon que les éléments filiformes de velours libèrent du chlorure d'acide gras au contact dudit matériau solide. Avantageusement, on répartit ledit au moins un chlorure d'acide gras au moins en surface dudit matériau solide par effleurement en appliquant sur ledit matériau solide une pression suffisante pour permettre un transfert de chlorure d'acide gras entre les éléments filiformes du velours et ledit matériau solide, mais sans détérioration du matériau solide.

Dans certains modes de réalisation d'un procédé selon l'invention, le dispositif répartiteur comprend au moins un rouleau applicateur présentant ladite surface applicatrice. Ledit au moins un rouleau applicateur est monté rotatif par rapport audit matériau solide et on répartit ledit au moins un chlorure d'acide gras par mise en rotation dudit au moins un rouleau applicateur, ladite surface applicatrice étant au contact dudit matériau solide. Dans certains modes de réalisation particulier selon l'invention, rien n'empêche de répartir ledit au moins un chlorure d'acide gras en surface dudit matériau solide au moyen d'un rouleau applicateur mis en rotation par roulage de la surface applicatrice du rouleau applicateur sur la surface dudit matériau solide.

Dans un premier mode de mise en oeuvre à l'échelle industrielle d'un procédé selon l'invention, ledit matériau solide étant sous forme d'une laize entrainée en défilement selon une direction de défilement parallèle à la plus grande dimension de la laize, entre un dévidoir amont de ladite laize et un enrouleur aval d'une laize de matériau solide acylé ;
- on dépose en continu -notamment à poste fixe- ledit au moins un chlorure d'acide gras sur au moins une face libre dudit matériau solide en défilement, et ;
- on répartit au moins en surface dudit matériau solide, ledit au moins un chlorure d'acide gras déposé en surface dudit matériau solide au moyen du dispositif répartiteur, et ;
- on chauffe ledit matériau solide de façon que ledit au moins un chlorure d'acide gras réparti au moins en surface dudit matériau solide atteigne ladite température d'acylation sur ledit matériau solide, et ;
- on dirige le flux de composition gazeuse sur ledit matériau solide à ladite température d'acylation, ce par quoi ledit matériau solide est acylé.

L'inventeur a déterminé que le procédé selon l'invention peut être mis en oeuvre à l'échelle industrielle sur une laize dudit matériau solide entrainée en défilement, notamment à grande vitesse de défilement, supérieure à 50 m/min. Selon certains modes de réalisation, le rouleau applicateur est entrainé en rotation selon un axe de rotation :
- s'étendant dans un plan parallèle au plan principal de la laize, et ;
- sensiblement orthogonal à la direction de défilement dudit matériau solide.

Rien n'empêche que selon d'autres modes de réalisation, le rouleau applicateur soit entraîné en rotation selon un axe de rotation :
- s'étendant dans un plan parallèle au plan principal de la laize, et ;
- non orthogonal et non parallèle à la direction de défilement dudit matériau solide.

Dans ce premier mode de mise en oeuvre à l'échelle industrielle d'un procédé selon l'invention, on dépose en continu -notamment à poste fixe- ledit au moins un chlorure d'acide sur au moins l'une des surfaces principales libres dudit matériau solide au moyen d'un dispositif d'impression. Dans ce premier mode de mise en oeuvre à l'échelle industrielle d'un procédé selon l'invention, le dispositif d'impression est choisi dans le groupe formé des dispositifs d'impression par flexographie et des dispositifs d'impression par héliographie.

Dans certains modes de réalisation particulier selon l'invention, rien n'empêche de prévoir de réaliser la répartition dudit au moins un chlorure d'acide sur une laize dudit matériau solide en défilement, au moyen de deux rouleaux applicateurs rotatifs selon des axes de rotation parallèles entre eux, chacune des faces principales opposées de la laize dudit matériau solide étant en contact avec l'un des rouleaux, au moins l'un des rouleaux applicateurs rotatifs présentant une surface applicatrice pourvue d'éléments filiformes de velours.

Dans un deuxième mode de mise en oeuvre à l'échelle industrielle d'un procédé selon l'invention, ledit matériau solide étant sous forme d'une laize entrainée en défilement selon une direction de défilement parallèle à la plus grande dimension de la laize, entre un dévidoir amont de ladite laize et un enrouleur aval d'une laize de matériau solide acylé ;
- on dépose en continu ledit au moins un chlorure d'acide gras sur le rouleau applicateur entrainé en rotation au contact dudit matériau solide, ce par quoi on répartit au moins en surface dudit matériau solide ledit au moins un chlorure d'acide gras à partir du rouleau applicateur entraîné en rotation, et ;
- on chauffe ledit matériau solide de façon que ledit au moins un chlorure d'acide gras réparti au moins en surface dudit matériau solide atteigne ladite température d'acylation, et ;
- on dirige le flux de composition gazeuse sur ledit matériau solide à ladite température d'acylation.

Dans ce deuxième mode de mise en oeuvre à l'échelle industrielle d'un procédé selon l'invention, on dépose ledit au moins un chlorure d'acide gras sur le rouleau applicateur entrainé en rotation, par contact dudit rouleau applicateur entrainé en rotation avec un rouleau anilox d'un dispositif d'impression, chargé dudit au moins un chlorure d'acide gras. Tout type de rouleau anilox peut être utilisé. Il peut être choisi dans le groupe formé des dispositifs d'impression par flexographie et des dispositifs d'impression par héliographie. Tout type de rouleau anilox peut être utilisé en adaptant les dimensions de ses cellules et leur densité surfacique à la quantité de chlorure d'acide gras à déposer. Rien n'empêche que le rouleau anilox présente une vitesse de rotation distincte de la vitesse de rotation du rouleau applicateur.

Dans certains modes de mise en oeuvre à l'échelle industrielle d'un procédé selon l'invention, le rouleau applicateur rotatif est entrainé en rotation avec une vitesse angulaire de rotation choisie de façon que les extrémités libres des éléments filiformes de velours soient entrainées en rotation avec une vitesse linéaire de valeur distincte de la valeur de la vitesse de défilement dudit matériau solide. Dans ces modes de réalisation, la vitesse linéaire de défilement des extrémités libres des éléments filiforme de velours et la vitesse de défilement dudit matériau solide ne sont pas synchronisées de façon à produire un effleurement sur ledit matériau solide conduisant à un étalement dudit au moins un chlorure d'acide gras au moins en surface dudit matériau solide.

Dans certains modes de mise en oeuvre à l'échelle industrielle d'un procédé d'acylation selon l'invention, le rouleau applicateur rotatif est entrainé en rotation selon un sens de rotation choisi pour que les extrémités libres des éléments filiformes de velours soient entrainées à contrecourant du défilement de la laize dudit matériau solide. Rien n'empêche cependant que dans d'autres modes de mise en oeuvre à l'échelle industrielle d'un procédé d'acylation selon l'invention, le rouleau applicateur rotatif soit entrainé en rotation selon un sens de rotation choisi pour que les extrémités libres des éléments filiformes de velours soient entrainées en défilement concourant (dans la même direction et dans le même sens) du défilement dudit matériau solide.

L'inventeur a aussi déterminé que le procédé selon l'invention peut être mis en oeuvre à l'échelle artisanale. Dans un mode de mise en oeuvre artisanale d'un procédé d'acylation selon l'invention, on réalise un dépôt dudit au moins un chlorure d'acide en surface dudit matériau solide au moyen d'un dispositif répartiteur présentant une surface applicatrice préalablement chargée avec ledit au moins un chlorure d'acide gras. Dans ce mode de mise en oeuvre artisanale d'un procédé d'acylation selon l'invention, le dispositif répartiteur comprend un rouleau applicateur ou « rouleau laqueur » et on dépose une quantité dudit au moins un chlorure d'acide gras dans un récipient à fond plat et on procède à un chargement dudit au moins un chlorure d'acide gras sur les éléments filiformes de velours du rouleau applicateur par roulage du rouleau applicateur au contact dudit au moins un chlorure d'acide gras. Dans ces modes de réalisation, on entraine le rouleau applicateur en mouvement rotatif alterné par un mouvement de va-et-vient imprimé manuellement au dispositif répartiteur. Dans ces modes de réalisation d'un procédé selon l'invention, on charge ledit au moins un chlorure d'acide gras sur les éléments filiformes de velours par roulage et compression du rouleau applicateur au contact du fond plat du récipient.

Dans certains de ces modes de réalisation d'un procédé d'acylation selon l'invention, ledit matériau solide est un matériau souple, c'est-à-dire qui est susceptible de pouvoir se déformer sous l'effet de son propre poids. Dans certains de ces modes de réalisation, ledit matériau solide peut être un matériau papier (c'est-à-dire un matériau essentiellement cellulosique) sous forme d'une feuille de papier dite « essuie-tout », de papier toilette, d'une serviette en papier, d'un papier filtre. Rien n'empêche non plus de choisir ledit matériau solide dans le groupe formé des matériaux papier réticulés dans lesquels la mobilité rotationnelle des fibres de cellulose ainsi réticulées est restreinte et dont les propriétés de résistance mécanique en général et de résistance mécanique en conditions humides (« *wet-strength* ») en particulier sont améliorées.

Dans certains modes de réalisation d'un procédé d'acylation selon l'invention, ledit matériau solide est un matériau papier (c'est-à-dire un matériau essentiellement cellulosique) formé de tout ou partie d'un mouchoir en papier jetable. Dans certains de ces modes de réalisation, ledit matériau solide est un mouchoir en papier jetable. Dans certains de ces modes de réalisation d'un procédé selon l'invention, ledit matériau solide est formé d'une pluralité de feuillets cellulosiques de grammage inférieur à 30 g/m² -notamment inférieur à 20 g/m² de préférence compris entre 10 g/m² et 30 g/m², plus préférentiellement compris entre 10 g/m² et 20 g/m²-. Avantageusement, dans certains de ces modes de réalisation, chaque feuillet cellulosique est formé de fibres de cellulose réticulées, liées entre elles par des liaisons hydrogène et par des liaisons covalentes formées avec au moins un groupement d'atomes de réticulation. Avantageusement, le groupement d'atome de réticulation est un dérivé du 1-chloro-2,3-époxypropane (« épichlorhydrine » ou « épichlorohydrine »).

Dans certains autres modes de réalisation d'un procédé d'acylation selon l'invention, ledit matériau solide est rigide, c'est-à-dire qu'il n'est pas susceptible de pouvoir se déformer sensiblement sous l'effet de son propre poids. Dans ces autres modes de réalisation, ledit matériau solide peut être une pièce de carton, notamment de carton ondulé. Dans ces autres modes de réalisation, ledit matériau solide est formé de feuilles de cellulose de grammage supérieur à 160 g/m².

Dans certains modes de réalisation d'un procédé d'acylation selon l'invention, ladite température d'acylation, est comprise entre 140°C et 200°C. La valeur de ladite température d'acylation est choisie en regard de la température de vaporisation à pression atmosphérique de chaque chlorure d'acide gras.

Dans certains modes de réalisation d'un procédé d'acylation selon l'invention, au moins un chlorure d'acide gras est choisi dans le groupe formé des chlorures d'acide de formule R-CO-Cℓ dans laquelle R est une chaine hydrocarbonée présentant un nombre d'atomes de carbone compris entre 17 (borne inclue) et 29 (borne inclue), notamment compris entre 21 (borne inclue) et 29 (borne inclue). Avantageusement, au moins un chlorure d'acide gras est le chlorure de l'acide béhénique (C₂₂H₄₃OCℓ). Avantageusement, au moins un chlorure d'acide gras est le chlorure de l'acide palmitique (C₁₆H₃₁OCℓ). Avantageusement, au moins un chlorure d'acide gras est le chlorure de l'acide stéarique (C₁₈H₃₅OCℓ).

Dans certains modes de réalisation d'un procédé d'acylation selon l'invention, on répartit au moins en surface dudit matériau solide -et le cas échéant en profondeur et sur au moins une partie d'épaisseur dudit matériau solide- une composition, dite composition d'acylation, formée exclusivement dudit au moins un chlorure d'acide gras. Dans ces modes de réalisation, ladite composition d'acylation est exempte (à l'exception de traces éventuelles) de tout milieu solvant, notamment de tout milieu solvant apolaire distinct du(des) chlorures d'acide(s) gras.

Cela étant, rien n'empêche que, dans d'autres modes de réalisation, ladite composition d'acylation comprenne ledit au moins un chlorure d'acide gras et du chlorure d'acétyle. L'inventeur a découvert que le chlorure d'acétyle, qui n'est pas un chlorure d'acide gras au sens de l'invention, est susceptible de réagir spontanément avec des molécules d'eau libres présentes dans ledit matériau solide et permet de préserver les chlorures d'acide gras de l'hydrolyse. L'inventeur a aussi observé que, de façon surprenante, le chlorure d'acétyle ne réagit ni avec les groupements hydroxyles des fibres de cellulose du matériau papier dans les conditions d'acylation du matériau papier et ne permet pas l'acétylation de la cellulose dans les conditions de réaction chromatogénique, ni avec lesdits hydroxyles réactogènes d'autres polymères hydroxylés comme l'alcool polyvinylique. Avantageusement, l'acide acétique qui est le produit d'hydrolyse du chlorure d'acétyle est suffisamment volatil et est adapté pour pouvoir être éliminé dudit matériau solide par entrainement par le flux de composition gazeuse. Avantageusement, on utilise le chlorure d'acétyle à titre de protecteur du(des) chlorure(s) d'acide(s) gras. Avantageusement, on utilise le chlorure d'acétyle à titre de réactif de transchloration permettant de restaurer des chlorures d'acides gras à partir d'éventuels acides gras libres hydrolysés lors de la réaction.

L'invention concerne également un matériau solide acylé susceptible de pouvoir être obtenu par un procédé selon l'invention.

L'invention concerne également un procédé d'acylation d'un matériau solide porteur de groupes hydroxyles (-OH), dits hydroxyles réactogènes, accessibles et susceptibles de pouvoir réagir avec un chlorure d'acide gras à l'état gazeux, caractérisé en combinaison par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante qui se réfère aux figures annexées et aux exemples donnés à titre uniquement non limitatif de l'invention et, dans lesquelles :
- la figure 1 est un schéma synoptique illustrant un premier mode de réalisation d'un procédé selon l'invention, et ;
- la figure 2 est un schéma synoptique illustrant un deuxième mode de réalisation d'un procédé selon l'invention susceptible de pouvoir être mis en oeuvre à l'échelle industrielle.

Dans un procédé selon l'invention d'acylation d'un matériau solide porteur de groupes hydroxyles (-OH), dits hydroxyles réactogènes, accessibles et susceptibles de pouvoir réagir avec un chlorure d'acide gras à l'état gazeux, notamment d'acylation d'un matériau cellulosique, en particulier d'un matériau papier, on répartit au moins un chlorure d'acide gras en surface et sur au moins une partie d'épaisseur dudit matériau solide au moyen d'un dispositif répartiteur présentant une surface applicatrice apte à déposer dudit au moins un chlorure d'acide gras à partir de ladite surface applicatrice au moins en surface dudit matériau solide. La surface applicatrice du dispositif répartiteur est un velours pourvu d'éléments filiformes de velours non réactifs vis-à-vis dudit au moins un chlorure d'acide gras. Le dispositif applicateur comprend au moins un rouleau applicateur présentant ladite surface applicatrice, ledit au moins un rouleau applicateur étant monté rotatif par rapport au matériau plan. Le rouleau applicateur peut être un rouleau applicateur ou rouleau « laqueur » du type « velours ». Il peut s'agir, à titre d'exemple non limitatif :
- d'un rouleau velours « Nespoli » (Nespoli Group, La Capelle, France) dont la face applicatrice est formée d'un velours pourvu d'éléments filiformes comprenant des fibres textiles enduites de Téflon^{®} et au moins en partie oléophobes. Par exemple, un tel rouleau velours présente une longueur de l'ordre de 10 cm et un diamètre de 30 mm. La longueur des fibres est comprise entre 4 mm et 12 mm, et de préférence de l'ordre de 5 mm ;
- d'un rouleau laqueur « DIALL » (Kingfisher International Products Limited, Londres, Grande-Bretagne) dont la surface applicatrice est de forme cylindrique de révolution, d'une longueur de 110 mm et d'un diamètre de section droite transversale de 40 mm et dont la face applicatrice comprend des fibres de mohair ;
- d'un rouleau laqueur « Roulor Professionnel » (Nespoli Group, La Capelle, France) dont la face applicatrice est formée d'un velours pourvu d'éléments filiformes comprenant des fibres polyester enduites de Téflon^{®} et au moins en partie oléophobes ;
- d'un rouleau en velours pur laine (OCAI, Domont, France) dont les fibres présentent une longueur de 4 mm.

L'inventeur a constaté que la mise en oeuvre d'une étape de répartition du(des) chlorures(s) d'acide(s) sur ledit matériau solide, au moyen d'un tel rouleau applicateur du type « laqueur » ou « velours » dans un procédé d'acylation chromatogénique selon l'invention permet d'obtenir un matériau solide acylé présentant des propriétés d'hydrophobie au moins équivalentes -pour les mêmes quantités de réactif déposé- aux propriétés d'hydrophobie de matériaux papier traités par le procédé d'imprégnation du matériau papier avec une solution de chlorure d'acide gras dans le pentane (WO99/08784), mais avec l'avantage considérable de ne pas utiliser de solvant -notamment de solvant organique-. Les propriétés hydrophobes obtenues par la mise en oeuvre d'un procédé selon l'invention sont, à quantité égale de chlorure d'acide gras déposé, bien meilleures que celles obtenues avec la méthode d'imprégnation par une solution de chlorure d'acide gras dans l'éther de pétrole 100/150 ou avec un dépôt de chlorure d'acide gras au moyen d'un rouleau anilox. Ces deux procédés de l'art antérieur conduisent à des matériaux solides acylés dont l'hydrophobie est décevante, utilisent nécessairement du chlorure d'acide gras en excès et exigent une étape complexe d'élimination du chlorure d'acide gras en excès par soufflage d'air chaud.

On définit la qualité de l'acylation en évaluant l'hydrophobie du matériau solide acylé par la mesure de l'angle de contact formé entre le plan principal du matériau solide acylé et une goutte d'eau pure déposée en surface du matériau solide acylé. Typiquement, une valeur d'angle de contact d'un matériau solide acylé est comprise entre 90° et 150°, la valeur d'angle de contact de 150° correspondant à un matériau particulièrement hydrophobe et déperlant. On définit également la qualité de l'acylation par la mesure de la durée pendant laquelle la valeur d'angle de contact comprise entre 90° et 150° est maintenue à température ambiante et par le test de la poche d'eau. Le test de la poche d'eau n'est réalisable qu'avec un matériau solide sous forme d'une feuille souple sensiblement carrée permettant d'en rassembler les coins pour former une poche d'eau. On analyse l'étanchéité de cette poche d'eau par un suivi de la perte d'eau (compte tenu de l'évaporation).

L'hydrophobie peut aussi être évaluée par l'observation de la déperlance. On dépose 1 mL d'eau distillée en surface du matériau solide et on observe si la goutte d'eau formée roule sur la surface, en s'accrochant ou non à la surface du matériau solide. Une déperlance satisfaisante correspond à un angle de contact d'environ 150°.

L'inventeur a pu observer que la valeur d'angle de contact formé entre le plan principal d'un matériau solide acylé par un procédé d'imprégnation d'une solution de chlorure d'acide gras dans du pentane et par un procédé selon l'invention est proche de 150°, alors que les valeurs d'angle de contact mesurées sur un matériau solide acylé selon un procédé d'imprégnation par une solution de chlorure d'acide gras dans l'éther de pétrole 100/150 et par dépôt au moyen d'un rouleau anilox sont au plus égales à 130°.

### Caractérisation de la présence de chlorure d'acide gras résiduel libre lors de l'acylation - Test du mouchard

On caractérise le fait que la quantité de chlorure d'acide gras déposée sur une première pièce d'un matériau solide, dite pièce à acyler, ne réagit que partiellement ou réagit en totalité avec ledit matériau solide de ladite pièce à acyler en déposant sur ladite pièce à acyler une quantité déterminée de chlorure d'acide gras et en disposant au contact de la face principale de ladite pièce à acyler, opposée à la face de réception du flux d'air chaud destiné à promouvoir le passage du chlorure d'acide gras de l'état liquide à l'état gazeux et à entrainer l'acide chlorhydrique formé du fait de la réaction d'acylation, une feuille de papier quelconque, dite feuille révélatrice. Lorsque le chlorure d'acide gras est présent en excès, il est entrainé par le flux d'air au contact de ladite feuille révélatrice où il réagit avec lesdits hydroxyles réactogènes des fibres de cellulose. On analyse ladite feuille révélatrice vis-à-vis de ses propriétés d'hydrophobie. Si la quantité déterminée de chlorure d'acide gras disposée au contact de ladite pièce à acyler est telle que du chlorure d'acide gras ne réagit pas avec ladite pièce à acyler et est transportée par le flux d'air au contact de ladite feuille révélatrice, alors les propriétés d'hydrophobie de ladite feuille révélatrice sont augmentées. Si, au contraire, la quantité déterminée de chlorure d'acide gras disposée au contact de ladite pièce à acyler est telle que la majorité ou la totalité du chlorure d'acide gras déposé sur ladite pièce à acyler réagit avec ladite pièce à acyler, alors ladite feuille révélatrice reste peu ou pas hydrophobe.

Il a été observé que dans des conditions strictement comparables à celles décrites à l'exemple 1 ci-dessous, le procédé d'acylation selon l'invention ainsi que le procédé d'acylation par d'imprégnation au moyen d'une solution de chlorure d'acide à 0,1% dans le pentane ne conduisent pas à une augmentation de l'hydrophobie de ladite pièce révélatrice. Ce résultat indique que le chlorure d'acide gras réagit en très grande majorité avec ladite feuille à acyler. Au contraire, le procédé par imprégnation à l'éther de pétrole 100/150 et le procédé par dépose par flexographie//héliographie nécessitent un excès de chlorure d'acide et conduisent à la formation de pièces révélatrices fortement hydrophobes. Le procédé selon l'invention permet de conserver les excellents résultats obtenus par la méthode d'imprégnation au pentane en déposant des quantités très faibles de chlorure d'acide gras mais avec l'avantage considérable de ne pas utiliser de solvant organique.

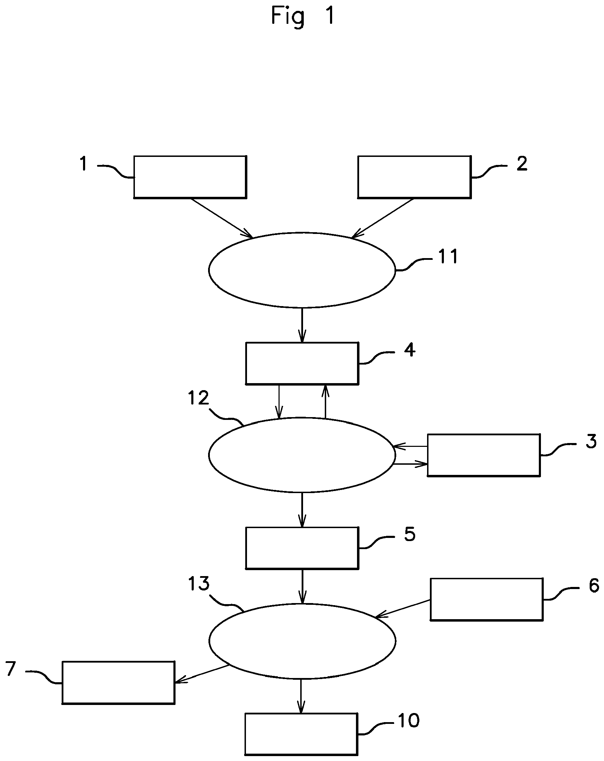

Un premier mode de réalisation d'un procédé selon l'invention d'acylation d'un matériau papier est représenté schématiquement en figure 1. Ce premier mode de réalisation est un mode de mise en oeuvre artisanale d'un procédé selon l'invention. Ce premier mode de réalisation peut être mis en oeuvre par une personne sans nécessiter d'équipement, d'ustensile, de protections particulières qui ne seraient pas de façon courante à sa disposition dans le commerce. Dans le mode de réalisation d'un procédé selon l'invention d'acylation d'un matériau solide représenté schématiquement en figure 1, on choisit au moins un chlorure 1 d'acide gras dans le groupe formé des chlorures d'acide gras de formule R-CO-Cℓ dans laquelle R est une chaine hydrocarbonée présentant un nombre d'atomes de carbone compris entre 17 (borne inclue) et 29 (borne inclue). Dans un tel procédé selon l'invention, on choisit aussi un dispositif 2 répartiteur présentant une surface applicatrice apte à déposer dudit au moins un chlorure 1 d'acide gras à partir de ladite surface applicatrice au moins en surface dudit matériau solide. Dans le mode de réalisation représenté en figure 1, le dispositif 2 répartiteur est un rouleau 2 laqueur « DIALL » (« *Kingfisher International Products Limited* », Londres, Grande-Bretagne) dont la face applicatrice comprend des fibres de mohair. Rien n'empêche cependant que le rouleau répartiteur soit un rouleau répartiteur présentant un velours oléophobe, notamment du type d'un velours oléophobe enduit de Téflon^{®}. On place une quantité de chlorure 1 d'acide gras dans un récipient à fond plat dimensionné pour pouvoir recevoir le rouleau 2 laqueur, permettre son roulage sur le fond du récipient et son chargement avec le chlorure 1 d'acide gras.

Lors d'une première 11 étape de chargement du rouleau 2 laqueur, le rouleau 2 laqueur étant à l'état neuf et non chargé en chlorure d'acide gras, on place une quantité de l'ordre de 1 mL de chlorure d'acide gras dans le récipient à fond plat. Lors de cette première étape 11 de chargement du rouleau 2 laqueur, on entraine manuellement le rouleau 2 laqueur de façon à ce que le rouleau 2 laqueur se déplace au contact du chlorure 1 d'acide gras de façon que les éléments filiformes du rouleau 2 laqueur se chargent de chlorure 1 d'acide gras sur la totalité de la surface applicatrice du rouleau 2 laqueur. Aux fins de limiter la quantité de chlorure 1 d'acide gras chargée sur le rouleau 2 laqueur, on procède à une étape facultative d'élimination d'un excès de chlorure 1 d'acide gras du rouleau 2 laqueur par roulage dudit rouleau 2 laqueur successivement sur plusieurs feuilles de papier de façon à épuiser l'excès de chlorure d'acide gras. On obtient ainsi un rouleau 4 laqueur chargé en chlorure 1 d'acide gras. Une telle étape d'élimination de l'excès de chlorure 1 d'acide gras est en particulier nécessaire lors de l'utilisation d'un rouleau répartiteur présentant un velours oléophobe,

Cela étant, lors d'une étape 11 ultérieure de chargement du rouleau 2 laqueur, le rouleau 2 laqueur ayant été préalablement chargé et utilisé pour l'application de chlorure d'acide gras sur un matériau solide, on place dans le récipient à fond plat une quantité de chlorure d'acide gras de l'ordre de 50 µL.

On choisit une pièce 3 d'un matériau solide, par exemple un mouchoir 3 en papier jetable. On dispose la pièce 3 de matériau papier sur un support adapté de façon à pouvoir transférer une quantité de chlorure 1 d'acide gras à partir du rouleau 4 laqueur chargé, sur le mouchoir 3 en papier jetable. On réalise cette application 12 par roulage du rouleau 4 laqueur ainsi chargé, sur la surface du mouchoir 3 en papier jetable. De préférence, on réalise ce roulage 12 sans exercer de pression autre que la pression nécessaire au roulage du rouleau 4 laqueur sur le mouchoir 3 jetable (c'est à dire une pression modérée comprise entre 0,1 et 0,2 kg/cm²). De cette façon, seule une faible quantité de chlorure 1 d'acide gras est transférée sur le mouchoir 3 en papier jetable. Or l'inventeur a observé que même si cette quantité de chlorure 1 d'acide gras transféré sur le mouchoir 3 jetable est faible, elle est, en tout état de cause suffisante pour permettre ultérieurement une acylation du mouchoir 3 jetable et lui conférer des propriétés d'hydrophobie au moins équivalentes aux propriétés d'hydrophobie obtenues par imprégnation d'un chlorure d'acide gras à partir d'une solution dans le pentane (WO99/08784), mais sans utilisation de solvant organique. On forme ainsi une pièce 5 d'un mouchoir jetable chargée en chlorure 1 d'acide gras. L'inventeur suppose que le chlorure 1 d'acide gras appliqué en surface du mouchoir 3 jetable se réparti, du fait des éléments filiformes du rouleau 3 laqueur, en surface du mouchoir 5 jetable chargé mais également au moins en profondeur du mouchoir 5 jetable chargé et au contact des fibres de cellulose du mouchoir 5 jetable chargé. En effet, il suppose que les éléments filiformes du rouleau 3 laqueur qui sont souples et déformables élastiquement transversalement permettent de répartir le chlorure 1 d'acide gras par effleurement sur au moins une partie d'épaisseur du mouchoir 3 jetable. Il suppose que, compte tenu de l'absence de solvant, le chlorure 1 d'acide gras ne forme pas d'amas lors de l'évaporation d'un solvant organique et se répartit de façon sensiblement homogène sur les fibres de cellulose du mouchoir 5 jetable chargé.

Dans le premier mode de réalisation d'un procédé selon l'invention représenté en figure 1, on induit la réaction d'acylation du mouchoir 3 jetable lors d'une étape 13 conjointe de chauffage du mouchoir 5 jetable chargé et d'application d'un flux d'air 6 en surface du mouchoir 5 jetable chargé. L'application d'un flux d'air 6 permet un déplacement de l'équilibre liquide/vapeur du chlorure 1 d'acide gras réparti sur le mouchoir 5 jetable chargé et la formation de chlorure 1 d'acide gras à l'état gazeux réactif vis-à-vis de la réaction d'acylation. Par ailleurs, le chauffage simultané du mouchoir 5 jetable chargé permet d'atteindre la température d'acylation par chromatogénie, par laquelle le chlorure 1 d'acide gras à l'état gazeux réagit avec un groupement hydroxyle libre d'une fibre de cellulose du mouchoir 5 jetable chargé en établissant une liaison ester entre ladite fibre de cellulose et le groupement acyle du chlorure 1 d'acide gras, ce par quoi le mouchoir 10 acylé est formé. Du fait de la réaction d'acylation, de l'acide chlorhydrique (HCℓ) est libéré. Le flux d'air 6 appliqué sur le mouchoir 5 jetable chargé permet de déplacer de l'acide chlorhydrique formé du fait de la réaction, à distance du mouchoir 5 jetable chargé de sorte que l'équilibre de la réaction d'acylation est déplacé dans le sens de la formation du mouchoir 10 jetable acylé.

Dans le mode de réalisation d'un procédé selon l'invention représenté en figure 1, on réalise l'étape 13 de chauffage et d'application d'un flux d'air 6 dans une étuve ventilée et maintenue à ladite température d'acylation. Du fait de la ventilation, le mouchoir 10 jetable acylé est exempt d'acide chlorhydrique. Du fait du contrôle de la quantité de chlorure 1 d'acide gras chargé sur le mouchoir 3 jetable et de la répartition du chlorure 1 d'acide gras sur le mouchoir 3 jetable, le mouchoir 10 jetable acylé est exempt de chlorure d'acide gras libre et d'acide gras libre. Aucune étape subséquente d'élimination d'un excès de chlorure 1 d'acide gras n'est nécessaire.

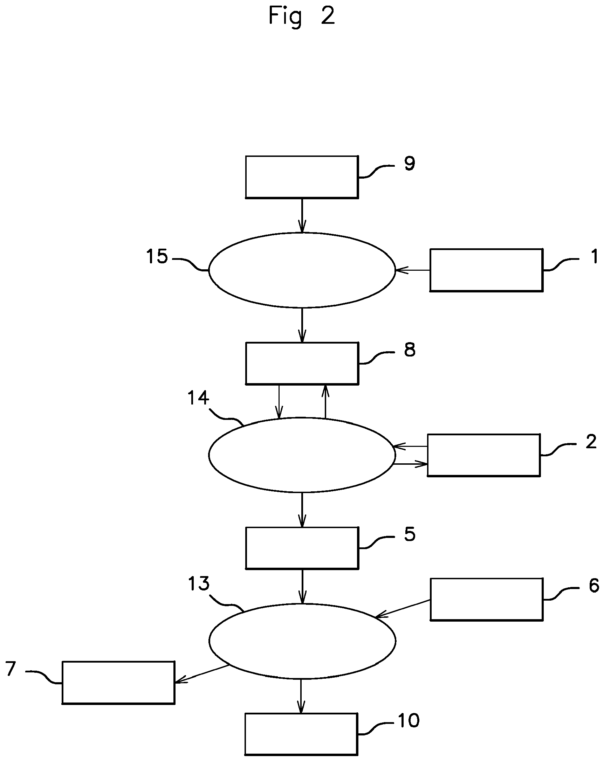

Un deuxième mode de réalisation d'un procédé selon l'invention d'acylation d'un matériau papier est représenté schématiquement en figure 2. Ce deuxième mode de réalisation est un mode de mise en oeuvre à l'échelle industrielle d'un procédé selon l'invention.

On choisit un dispositif de mise en défilement d'une laize 9 d'un matériau papier entrainée en défilement entre un dévidoir amont et un dispositif aval de rembobinage d'une laize 10 de papier acylé tel que décrit dans FR2967363. Dans certains modes de réalisation, la laize 9 de matériau papier est entraînée en défilement à une vitesse comprise entre 30 et 100 mètres par minute. On choisit au moins un chlorure 1 d'acide gras dans le groupe formé des chlorures d'acide gras de formule R-CO-Cℓ dans laquelle R est une chaîne hydrocarbonée présentant un nombre d'atomes de carbone compris entre 17 (borne inclue) et 29 (borne inclue). On réalise une étape 15 de dépose en continu dudit au moins un chlorure 1 d'acide gras sur la laize 9 de papier entraînée en défilement, par tout moyen adapté connu de l'homme du métier. Il peut s'agir d'un dispositif amont d'impression choisi dans le groupe formé des dispositifs d'impression par flexographie et des dispositifs d'impression par héliographie. On forme par cette étape 15 de dépose, un matériau 8 papier enduit de chlorure 1 d'acide gras. En position aval par rapport au dispositif d'impression, on soumet le matériau 8 papier enduit de chlorure 1 d'acide gras à une étape 14 de redistribution et de répartition du chlorure 1 d'acide gras en surface sur au moins une partie de profondeur du matériau 8 papier enduit. On réalise cette étape de redistribution/répartition en soumettant la surface de la laize de papier 8 enduit en défilement à un effleurement au moyen d'un dispositif 2 répartiteur comprenant une surface applicatrice formée d'un velours pourvu d'éléments filiformes de velours non réactifs vis-à-vis dudit au moins un chlorure d'acide. Avantageusement, le dispositif répartiteur comprend un rouleau 2 laqueur entraîné en rotation à contrecourant ou selon le sens de défilement de la laize de matériau 8 papier enduit. Les éléments filiformes de velours, qu'ils soient oléophiles ou oléophobes, sont adaptés pour pouvoir :
∘ se charger dudit au moins un chlorure d'acide gras par contact avec ledit au moins un chlorure d'acide gras, et ;
∘ libérer dudit au moins un chlorure d'acide gras par contact des éléments filiformes de velours avec la laize de matériau 8 papier enduit.

On forme du fait de cette étape 14 de redistribution/répartition une laize de matériau solide 5 chargé d'une quantité dudit au moins un chlorure d'acide gras. L'inventeur a observé en particulier que même dans le cas où la quantité de chlorure 1 d'acide gras transféré sur la laize 5 dudit matériau solide est faible et de l'ordre de 20 mg/m², elle est, en tout état de cause suffisante pour permettre ultérieurement une acylation dudit matériau solide et pour lui conférer des propriétés d'hydrophobie au moins équivalentes aux propriétés d'hydrophobie obtenues par imprégnation d'un chlorure d'acide gras à partir d'une solution dans le pentane (WO99/08784), mais sans utilisation de solvant organique.

Dans le deuxième mode de réalisation d'un procédé selon l'invention représenté en figure 2, on induit la réaction d'acylation dudit matériau solide de la laize en défilement lors d'une étape 13 avale conjointe de chauffage de la laize 5 chargée et d'application d'un flux d'air 6 en surface de la laize 5 chargée. L'application d'un flux d'air 6 permet un déplacement de l'équilibre liquide/vapeur du chlorure 1 d'acide gras réparti sur la laize 5 chargée et la formation de chlorure 1 d'acide gras à l'état gazeux réactif vis-à-vis de la réaction d'acylation. Par ailleurs, le chauffage simultané de la laize 5 chargée permet d'atteindre la température d'acylation par chromatogénie, par laquelle le chlorure 1 d'acide gras à l'état gazeux réagit avec un hydroxyle libre dudit matériau solide en établissant une liaison ester entre un constituant dudit matériau solide et le groupement acyle du chlorure 1 d'acide gras, ce par quoi la laize de matériau solide acylé 10 est formée. Du fait de la réaction d'acylation, de l'acide chlorhydrique (HCℓ) est libéré. Le flux d'air 6 appliqué sur la laize 5 chargée permet de déplacer de l'acide chlorhydrique formé du fait de la réaction, à distance de la laize 5 sous la forme d'une composition 7 d'air chargée d'acide chlorhydrique de sorte que l'équilibre de la réaction d'acylation est déplacé dans le sens de la formation du matériau 10 papier acylé.

### EXEMPLE 1 - Acylation selon l'invention d'un matériau solide - Détermination de conditions optimales de dépôt de chlorure d'acide stéarique

On place de l'ordre de 1 mL de chlorure d'acide stéarique non dilué dans une cuvette à fond plat. On imprègne un rouleau laqueur (« DIALL », Kingfisher International Products Limited, Londres, Grande-Bretagne) de chlorure d'acide stéarique en faisant rouler le rouleau laqueur sur le fond de la cuvette à fond plat. Le rouleau laqueur est de forme cylindrique de révolution présentant un diamètre de 40 mm, une longueur de 100 mm et présentant des éléments filiformes en laine mohair d'une longueur moyenne de 5 mm, avec 1 ml de chlorure d'acide stéarique non dilué. On homogénéise l'imprégnation en faisant rouler le rouleau sur le fond d'un récipient plat, ce par quoi la totalité du chlorure d'acide stéarique est transférée sur le rouleau laqueur. On choisit une pluralité de mouchoirs en papier jetables (Kleenex^{®}, Kimberly-Clark Corporation) carrés de dimensions 21 cm x 21cm. Chaque mouchoir en papier jetable est formé de quatre feuillets de papier superposés, chaque feuillet présentant une masse approximative de 0,5 g (11 g/m²). On procède à un dépôt de chlorure d'acide stéarique sur l'une des faces principales d'un premier mouchoir, dit mouchoir à acyler, de la pluralité de mouchoirs en papier jetables en faisant rouler le rouleau au contact la totalité de l'une des deux faces de ce premier mouchoir et en appliquant sur le rouleau laqueur une pression modérée et adaptée pour permettre un écrasement partiel des éléments filiformes du rouleau. Pour ce faire, on exerce sur le rouleau une force sensiblement verticale et dirigée du haut vers le bas et de valeur comprise entre de l'ordre de 5 N et de l'ordre de 20 N, en veillant à ne pas détériorer le mouchoir. On dépose ainsi du chlorure d'acide stéarique imprégné sur le rouleau laqueur successivement sur une face, dite face de dépôt, de chacun des mouchoirs de la pluralité de mouchoirs à acyler et sans recharger le rouleau laqueur. Après dépose du chlorure d'acide stéarique, on dispose sur la face opposée à ladite face de dépôt de chaque mouchoir à acyler, un mouchoir en papier jetable vierge, dit mouchoir révélateur, et on introduit chaque ensemble formé du mouchoir à acyler surmonté dudit mouchoir révélateur correspondant dans une étuve ventilée à 150° pendant 2 minutes. On retire de l'étuve ventilée chaque paire de mouchoir formée d'un mouchoir à acyler et dudit mouchoir révélateur correspondant. Après refroidissement, on analyse l'hydrophobie de ladite face de dépôt du mouchoir à acyler et l'hydrophobie de la face opposée à ladite face de dépôt. On analyse également l'hydrophobie dudit mouchoir révélateur. On constate que les deux faces des mouchoirs de la pluralité de mouchoirs successivement imprégnés présentent une forte hydrophobie révélée par un angle de contact constant avec l'eau de 150° sur toute la surface du mouchoir. L'hydrophobie dudit mouchoir révélateur est initialement forte ce qui indique que la quantité de chlorure d'acide stéarique déposée sur les premiers mouchoirs selon leur ordre d'imprégnation est supérieure à la quantité maximale de chlorure d'acide stéarique susceptible de pouvoir être greffée sur un tel mouchoir. Cependant, il est observé que cette hydrophobie diminue avec le rang d'imprégnation du mouchoir et devient hétérogène. Ceci indique que le rouleau est de moins en moins chargé en réactif. L'imprégnation successive de mouchoirs en série permet d'obtenir des mouchoirs acylés présentant une excellente hydrophobie et en même temps une hydrophobie faible sur ledit mouchoir révélateur correspondant. Le rouleau est alors chargé de façon optimale en chlorure d'acide stéarique. On constate qu'il est possible de continuer à déposer du chlorure d'acide stéarique sur un grand nombre de mouchoirs sans que l'hydrophobie obtenue diminue sensiblement.

### EXEMPLE 2 - Quantification

On pèse avec une balance de précision, un mouchoir avant dépose et après dépose de chlorure d'acide stéarique avec le rouleau est chargé en chlorure d'acide stéarique de manière optimale comme décrit à l'exemple 1. On trouve une valeur de 1 mg de chlorure d'acide stéarique par face en moyenne. On trouve une valeur de 2 mg quand le chlorure d'acide stéarique est déposé sur les deux faces. La quantité de chlorure d'acide stéarique déposée est de l'ordre de 45 mg/m² de matériau solide, les propriétés d'hydrophobie sont excellentes sans utilisation de solvant apolaire de type pentane.

### EXEMPLE 3 - Reproductibilité

Après avoir procédé à un premier dépôt de chlorure d'acide stéarique et déterminé la quantité déposée par pesée, on répète l'opération 4 fois en pesant à chaque fois le mouchoir. On constate que chaque dépôt de chlorure d'acide stéarique se traduit par une augmentation additionnelle de 1 mg. Une quantité de 5 mg a ainsi été déposée. Cet exemple montre que le dépôt de chlorure d'acide stéarique au moyen d'un rouleau est reproductible.

### EXEMPLE 4 - Optimisation du chargement du rouleau

On répète l'opération de chargement du rouleau comme à l'exemple 1 avec la dépose du chlorure d'acide stéarique mais sans appliquer ledit mouchoir révélateur. Après une minute dans l'étuve à 150°C, on ouvre la porte. Lors du chauffage des premiers mouchoirs, on observe un brouillard de condensation. Celui-ci diminue ensuite progressivement avec les mouchoirs traités. Lorsqu'on observe que le brouillard de condensation a pratiquement disparu, on teste le mouchoir en papier pour son hydrophobie et on constate que la face sur laquelle le chlorure d'acide stéarique a été déposé présente une très forte hydrophobie et des angles de contact de 150°. Lorsque l'opération de chargement du rouleau est réalisée avec 1 mL de chlorure d'acide stéarique, le rang du premier mouchoir de la pluralité de mouchoirs à acyler sur lesquels on applique successivement le rouleau et qui ne conduit pas à une formation de brouillard de condensation est aux environs du 30^{ème} rang.

### EXEMPLE 5 - Imperméabilité

On démontre le caractère imperméable des mouchoirs jetables acylés en suspendant chaque mouchoir jetable carré par leurs quatre coins et en versant une quantité d'eau (10 mL) dans la poche de mouchoir ainsi formée. Les poches de mouchoir jetables acylés qui ont été préparées avec le rouleau chargé de manière optimale comme décrit à l'exemple 1 sont parfaitement étanches à l'eau sur une période supérieure à 4 jours.

### EXEMPLE 6 - Exemple comparatif (hors invention)

On prépare 100 mL d'une solution de chlorure d'acide stéarique à 0,05% dans du pentane anhydre permettant d'imprégner 10 mouchoirs en papier jetables (Kleenex^{®}, Kimberly-Clark Corporation) carrés de dimensions 21 cm x 21 cm, chaque mouchoir en papier jetable retenant de l'ordre de 5 µl de chlorure d'acide stéarique. On élimine le pentane par évaporation spontanée sous une hotte aspirante d'un air sec de taux d'hygrométrie inférieur à de l'ordre de 20 %. On ne réalise aucune étape selon l'invention de répartition du chlorure d'acide stéarique sur les mouchoirs en papier jetables. On place ensuite l'un des mouchoirs en papier jetables dans une étuve ventilée à la température de 150°C. On laisse la réaction se dérouler pendant 2 minutes. À l'ouverture de la porte de l'étuve ventilée, on n'observe pas de formation d'un brouillard de condensation de chlorure d'acide stéarique libre. Le mouchoir en papier jetable obtenu est hydrophobe et imperméable à l'eau. On dépose une goutte d'eau distillée de 200µL en surface de l'un des mouchoirs en papier jetables acylés. La goutte d'eau reste formée en surface du mouchoir sans s'étaler. L'angle de contact est de valeur proche de 150° attestant d'une efficacité de greffage correcte. On place un mouchoir vierge, dit mouchoir révélateur, au-dessus d'un deuxième mouchoir tel que préparé ci-dessus, et on place l'ensemble dans l'étuve ventilée à 150°C pendant 2 minutes. On teste ledit mouchoir révélateur vis-à-vis de son hydrophobie et on constate que celle-ci est très faible. Ces deux résultats confirment le fait que lorsque des quantités appropriées mais très faibles sont appliquées avec la méthode par imprégnation au pentane, on obtient des bonnes valeurs d'hydrophobie et sans chlorure d'acide stéarique en excès. L'invention vise à obtenir de telles valeurs d'hydrophobie sans utilisation de solvant organique.

### EXEMPLE 7 - Exemple comparatif (hors invention)

On prépare des solutions de chlorure d'acide stéarique à 0,05%, 0,1% et 0,5% dans l'éther de pétrole 100/150. On imprègne des mouchoirs en papier avec ces différentes solutions ainsi qu'un témoin réalisé avec du solvant pur, on laisse s'évaporer la majeure partie du solvant et on place ensuite les mouchoirs à l'étuve pendant 2 minutes à 150°C. On ouvre ensuite la porte de l'étuve et on constate, dans tous les cas, la formation d'un brouillard de condensation. Ce dernier est plus important dans le cas de la solution à 0,5% et moins important dans le cas du solvant seul. Ces résultats indiquent que l'éther de pétrole 100/150 reste piégé dans les fibres du matériau papier lorsqu'il est seul et qu'il s'associe au réactif lorsque celui-ci est en excès. On constate qu'il est nécessaire de poursuivre le chauffage dans l'étuve pendant encore 2 minutes supplémentaires pour ne plus constater la présence du brouillard de condensation à l'ouverture de la porte.

On détermine les valeurs d'angle de contact des différents échantillons et on constate que les valeurs obtenues pour 0,05% et 0,1% sont de 100° et 120° respectivement tandis que les valeurs obtenues pour 0,5% sont de l'ordre de 150°. On refait l'expérience avec des mouchoirs révélateurs. Une hydrophobie importante est observée pour 0,5% mais une hydrophobie significative est aussi observée pour 0,05 et 0,1%. Ces résultats indiquent que la présence de solvant résiduel perturbe le bon déroulement de la réaction d'acylation par chromatogénie.

### EXEMPLE 8 - Traitement d'acylation selon l'invention -Méthode par effleurement.

Un rouleau laqueur « Diall » de dimensions 4x10cm présentant des éléments filiformes en laine de mohair, préalablement chargé avec 1ml de chlorure d'acide stéarique est fixé sur une tige qui est ensuite montée sur une perceuse électrique à vitesse variable et ajustable. Le rouleau laqueur en rotation est alors approché d'un mouchoir en papier jetable à traiter de façon que l'extrémité libre des éléments filiformes du rouleau laqueur effleurent la surface du mouchoir en papier. On procède de façon à ne pas détériorer la structure du mouchoir en papier. On procède ensuite comme dans l'exemple 1. On dépose du chlorure d'acide gras successivement sur les mouchoirs d'une série de mouchoirs jetables jusqu'à obtenir des propriétés optimales d'hydrophobie sur la face sur laquelle le chlorure d'acide gras a été déposé et une hydrophobie faible sur la face opposée à la face de dépose. On pèse le mouchoir avant et après dépose. On obtient des valeurs de 1 mg de chlorure d'acide par face, équivalentes à celles déposées par rouleau selon la méthode décrite à l'exemple 1. Les éléments filiformes du velours disposent d'un degré de liberté qui leurs permet de glisser sur la surface du mouchoir en papier et sont adaptés pour transférer efficacement le chlorure d'acide gras sur la surface du mouchoir en papier.

### EXEMPLE 9 - Rechargement du rouleau

Les rouleaux laqueurs chargé initialement avec 1 mL de chlorure d'acide gras (tel que décrit à l'exemple 1) et utilisés pour l'enduction de feuilles de matériau papier finissent par s'épuiser après la dépose de chlorure d'acide gras sur un grand nombre de feuille de matériau papier. Ils sont rechargés en déposant 50 µl de chlorure d'acide gras au fond du récipient de dépose et en faisant absorber cette quantité de chlorure d'acide gras par le rouleau laqueur. Ces rouleaux laqueurs rechargés se comportent comme les rouleaux neufs chargés avec 1mL de réactif. Ces résultats sont en accord avec les mesures de quantités de dépose de réactif réalisées par pesée directe.

### EXEMPLE 10 - Répartition en profondeur / superficielle

On applique du chlorure d'acide stéarique sur un mouchoir en papier jetable composé d'une superposition de quatre feuillets associés. Après application de chlorure d'acide stéarique sur l'une des faces principales (feuillet n°1) du mouchoir par l'une ou l'autre des méthodes des exemples 1 ou 8 ci-dessus, on dissocie les différents feuillets et on les place à l'étuve. On constate que le premier feuillet (feuillet n°1) est très hydrophobe mais les résultats sont différents suivant les modes de dépose. Par application selon la méthode décrite à l'exemple 1, on observe que le feuillet n°2 est hydrophobe ainsi que le feuillet n°3, mais en moindre mesure. Par application selon la méthode décrite à l'exemple 8, seul le feuillet n°1 est fortement hydrophobe. Ces résultats indiquent que le réactif est capable de pénétrer de façon plus ou moins importante dans l'épaisseur du papier en fonction du mode de dépose. La méthode décrite à l'exemple 1 permet au chlorure d'acide gras de pénétrer plus en profondeur alors que la méthode décrite à l'exemple 8 permet une dépose limitée superficiellement.

### EXEMPLE 11 - Transfert de réactif.

On choisit une feuille d'essuie-tout à titre de matériau solide, qui a été chargée selon la méthode décrite à l'exemple 8 ci-dessus en utilisant un rouleau laqueur rechargé en chlorure d'acide gras de façon à déposer du chlorure d'acide gras principalement en surface de la feuille d'essuie-tout. On utilise maintenant des rouleaux vierges et on les applique sur cette feuille selon l'une des méthodes décrites aux exemples 1 et 8. On utilise ensuite ces rouleaux pour enduire des feuilles vierges. Après enduction, ces feuilles sont placées à l'étuve 1 minute à 150°C et testées pour leur hydrophobie. On constate que les feuilles enduites selon la méthode décrite à l'exemple 8 sont plus hydrophobes que celles enduites selon la méthode décrite à l'exemple 1. La méthode décrite à l'exemple 8 est plus efficace que la méthode décrite à l'exemple 1 pour récupérer du réactif en surface de la première feuille enduite et le transférer sur une autre feuille. Ces résultats indiquent que les deux méthodes de dépose ne sont pas équivalentes. La méthode décrite à l'exemple 1 tend à faire pénétrer profondément le réactif dans l'épaisseur des feuilles de papier tandis que la méthode décrite à l'exemple 8 permet un étalement plus superficiel du chlorure d'acide gras.

### EXEMPLE 12 - Température de répartition

On charge un rouleau laqueur de chlorure d'acide gras de manière optimale conformément à l'exemple 1. On continue à enduire des feuilles avec ce rouleau selon la méthode décrite à l'exemple 1 ou selon la méthode décrite à l'exemple 8 sans le recharger mais en plaçant les feuilles à une température de 60°C. On constate que l'hydrophobie des feuilles enduites à 60°C est meilleure que celle réalisée à température ambiante. Ces résultats indiquent que l'efficacité de transfert de réactif est meilleure à plus haute température.

### EXEMPLE 13 - Dépose à chaud

On charge un rouleau laqueur de chlorure d'acide gras de manière optimale conformément à l'exemple 1. On place un mouchoir en papier dans l'étuve à 160°C de façon à ce qu'il atteigne son équilibre thermique. On ouvre ensuite la porte de l'étuve et on dépose le chlorure d'acide gras avec le rouleau laqueur directement sur le mouchoir chaud dans l'étuve. On n'observe aucun brouillard de condensation lors du dépôt. Le mouchoir est ensuite retiré de l'étuve et testé pour son hydrophobie. Celle-ci est excellente avec une déperlance nette. Cette expérience montre qu'il est possible de réaliser la dépose du chlorure d'acide gras à haute température correspondant à des conditions de réaction chromatogénique. La dépose et la réaction sont quasiment simultanées. L'intérêt additionnel de cette dépose à haute température est qu'elle permet d'éliminer au moins une partie de l'eau contenue dans le papier -qui pourrait conduire à une hydrolyse partielle du chlorure d'acide gras- et de réaliser l'acylation dans des conditions sensiblement anhydres.

### EXEMPLE 14 - Chlorure d'acide béhénique

On utilise comme réactif le chlorure d'acide palmitique et le chlorure d'acide béhénique. Des bons résultats sont obtenus dans les deux cas. L'hydrophobie conférée par l'acide palmitique est moindre, alors que celle conférée par l'acide béhénique est excellente.

### EXEMPLE 15 - Rouleau velours oléophile et rouleau velours oléophobe

On réalise un essai comparatif de la répartition d'un chlorure d'acide gras sur un matériau papier :
- au moyen d'un rouleau laqueur formé d'un velours oléophile selon l'invention, et ;
- au moyen d'un rouleau laqueur formé d'un velours oléophobe selon l'invention dans lequel les éléments filiformes sont enduits de téflon^{®}.

Le rouleau laqueur présentant un velours oléophobe nécessite d'éliminer préalablement au dépôt un excès de chlorure d'acide gras répartie de façon non homogène en surface du rouleau laqueur, mais le dépôt de chlorure d'acide gras résiduel donne d'excellents résultats en terme d'hydrophobie.

### EXEMPLE 16 - Alcool polyvinylique (PVA)

On applique avec un rouleau laqueur, 100mg /m² de chlorure d'acide stéarique sur une feuille de papier couchée avec 10g de PVA 2899 de poids moléculaire moyen de 145000. On place cette feuille dans une étuve à 150°. Au bout d'une minute, on ouvre la porte et on ne constate pas la formation de brouillard de condensation ce qui indique qu'il n'y a pas d'excès important de réactif. La feuille est alors testé pour son hydrophobie et elle se révèle parfaitement déperlante.

### EXEMPLE 17 - Essai comparatif - Rouleau mousse (hors invention)

On charge un rouleau mousse avec 1 ml de chlorure d'acide gras. On homogénéise le chargement du rouleau mousse par roulage. On applique le rouleau sur une feuille de papier essuie tout. Après passage à l'étuve à 150°, on analyse l'hydrophobie de la feuille de papier essuie tout. On constate que l'hydrophobie est irrégulière. La feuille d'essuie tout présente des zones hydrophobes et des zones non hydrophobes. Le rouleau mousse ne permet pas une répartition du chlorure d'acide gras sur la feuille d'essuie tout telle qu'elle permette une imperméabilisation de la feuille d'essuie tout.

## Revendications

1. Procédé d'acylation d'un matériau (3,9) solide porteur d'hydroxyles (-OH), dits hydroxyles réactogènes, accessibles et susceptibles de pouvoir réagir avec un chlorure d'acide gras à l'état gazeux, dans lequel :
- on répartit au moins en surface dudit matériau (3,9) solide au moins un chlorure (1) d'acide gras au moyen d'un dispositif (2) répartiteur présentant une surface applicatrice apte à déposer dudit au moins un chlorure (1) d'acide gras au moins en surface dudit matériau (3,9) solide à partir de ladite surface applicatrice ;
- on chauffe ledit au moins un chlorure (1) d'acide gras réparti au moins en surface dudit matériau (3,9) solide, à une température, dite température d'acylation, inférieure à la température de vaporisation dudit au moins un chlorure (1) d'acide gras, de façon à permettre une acylation dudit matériau (3,9) solide par réaction d'au moins un chlorure (1) d'acide gras à l'état gazeux sur au moins un desdits hydroxyles réactogènes dudit matériau (3,9) solide, et ;
- on dirige un flux d'une composition (6) gazeuse sur ledit matériau (3,9) solide à ladite température d'acylation, de façon à entrainer au moins une partie d'acide chlorhydrique (7) gazeux formé du fait de la réaction d'acylation ;
**caractérisé en ce que** la surface applicatrice du dispositif (2) répartiteur est un velours pourvu d'éléments filiformes de velours, non réactifs vis-à-vis dudit au moins un chlorure (1) d'acide gras et aptes à pouvoir :
∘ se charger dudit au moins un chlorure (1) d'acide gras par contact avec ledit au moins un chlorure d'acide gras, et ;
∘ libérer dudit au moins un chlorure d'acide gras par mise en contact des éléments filiformes du velours avec ledit matériau (3,9) solide ;
l'étape (12,14) de répartition étant réalisée de façon à répartir sur ledit matériau (3,9) solide une quantité dudit au moins un chlorure (1) d'acide gras comprise entre 20 mg/m² et 1 g/m² de surface dudit matériau (3,9) solide.

2. Procédé selon la revendication 1, **caractérisé en ce qu'**on répartit ledit au moins un chlorure d'acide gras au moins en surface dudit matériau solide par effleurement d'extrémités longitudinales libres des éléments filiformes de velours de la surface applicatrice sur la surface dudit matériau solide.

3. Procédé selon l'une des revendications 1 ou 2, **caractérisé en ce que** le dispositif répartiteur comprend au moins un rouleau applicateur présentant ladite surface applicatrice, ledit au moins un rouleau applicateur étant monté rotatif par rapport audit matériau solide et **en ce qu'**on répartit ledit au moins un chlorure d'acide gras par mise en rotation dudit au moins un rouleau applicateur, ladite surface applicatrice étant au contact dudit matériau solide.

4. Procédé selon la revendication 3, **caractérisé en ce que** le matériau solide étant sous forme d'une laize entrainée en défilement selon une direction de défilement parallèle à la plus grande dimension de la laize, entre un dévidoir amont de ladite laize et un enrouleur aval d'une laize de matériau solide acylé ;
- on dépose en continu ledit au moins un chlorure d'acide gras sur au moins une surface libre dudit matériau solide en défilement, et ;
- on répartit au moins en surface dudit matériau solide, ledit au moins un chlorure d'acide gras déposé en surface dudit matériau solide au moyen du dispositif répartiteur, et ;
- on chauffe ledit matériau solide de façon que ledit au moins un chlorure d'acide gras réparti au moins en surface dudit matériau solide atteigne ladite température d'acylation sur ledit matériau solide, et ;
- on dirige le flux de composition gazeuse sur ledit matériau solide à ladite température d'acylation, ce par quoi ledit matériau solide est acylé.

5. Procédé selon la revendication 4, **caractérisé en ce qu'**on dépose en continu ledit au moins un chlorure d'acide sur au moins l'une des surfaces principales libres dudit matériau solide au moyen d'un dispositif d'impression.

6. Procédé selon la revendication 5, **caractérisé en ce que** le dispositif d'impression est choisi dans le groupe formé des dispositifs d'impression par flexographie et des dispositifs d'impression par héliographie.

7. Procédé selon la revendication 3, **caractérisé en ce que** ledit matériau solide étant sous forme d'une laize entrainée en défilement selon une direction de défilement parallèle à la plus grande dimension de la laize, entre un dévidoir amont de ladite laize et un enrouleur aval d'une laize de matériau solide acylé ;
- on dépose en continu ledit au moins un chlorure d'acide gras sur le rouleau applicateur entrainé en rotation au contact dudit matériau solide, ce par quoi on répartit au moins en surface dudit matériau solide ledit au moins un chlorure d'acide gras à partir du rouleau applicateur entraîné en rotation, et ;
- on chauffe ledit matériau solide de façon que ledit au moins un chlorure d'acide gras réparti au moins en surface ledit matériau solide atteigne ladite température d'acylation, et ;
- on dirige le flux de composition gazeuse sur le matériau papier à ladite température d'acylation.

8. Procédé selon la revendication 7, **caractérisé en ce qu'**on dépose ledit au moins un chlorure d'acide gras sur le rouleau applicateur entrainé en rotation, par contact dudit rouleau applicateur entrainé en rotation avec un rouleau anilox d'un dispositif d'impression chargé dudit au moins un chlorure d'acide gras.

9. Procédé selon l'une des revendications 1 à 8, **caractérisé en ce que** les éléments filiformes de velours sont formés d'au moins un matériau choisi dans le groupe formé des fibres de kératine, des fibres aramides, des fibres polyester, des fibres polyamides, des fibres acryliques, des fibres fluorées, des fibres munies d'un revêtement fluoré, des microfibres, des microfibres tissées, des super-microfibres et des ultra-microfibres.

10. Procédé selon l'une des revendications 1 à 3, **caractérisé en ce qu'**on réalise un dépôt dudit au moins un chlorure d'acide en surface dudit matériau solide au moyen d'un dispositif répartiteur présentant une surface applicatrice préalablement chargée avec ledit au moins un chlorure d'acide gras.

11. Procédé selon la revendication 10, **caractérisé en ce que** ledit matériau solide est un mouchoir en papier jetable.

12. Procédé selon l'une des revendications 1 à 11, **caractérisé en ce que** les éléments filiformes de velours présentent une longueur comprise entre 1 mm et 10 mm.

13. Procédé selon l'une des revendications 4 à 12, **caractérisé en ce que** le rouleau applicateur rotatif est entrainé en rotation avec une vitesse angulaire de rotation choisie de façon que les extrémités libres des éléments filiformes de velours soient entrainées en rotation avec une vitesse linéaire de valeur distincte de la valeur de la vitesse de défilement dudit matériau solide.

14. Procédé selon l'une des revendications 4 à 13, **caractérisé en ce que** le rouleau applicateur rotatif est entrainé en rotation selon un sens de rotation choisi pour que les extrémités libres des éléments filiformes de velours soient entrainées à contrecourant du défilement de la laize dudit matériau solide.

15. Procédé selon l'une des revendications 4 à 13, **caractérisé en ce que** le rouleau applicateur rotatif est entrainé en rotation selon un sens de rotation choisi pour que les extrémités libres des éléments filiformes de velours soient entrainées en défilement concourant du défilement dudit matériau solide.

16. Procédé selon l'une des revendications 1 à 15, **caractérisé en ce que** les éléments filiformes de velours présentent une flexibilité choisie pour ne pas endommager ledit matériau solide par contact avec ledit matériau solide.

17. Procédé selon l'une des revendications 1 à 16, **caractérisé en ce que** ledit matériau solide présent une couche de surface extérieure formée d'alcool polyvinylique.

18. Procédé selon l'une des revendications 1 à 17, **caractérisé en ce qu'**on répartit au moins en surface dudit matériau solide une composition, dite composition d'acylation, comprenant ledit au moins un chlorure (1) d'acide gras et du chlorure d'acétyle.

## Patentansprüche

1. Verfahren zur Acylierung eines festen Materials (3, 9), das Hydroxyle (-OH), bezeichnet als reaktogene Hydroxyle, trägt, die zugänglich sind und mit einem Fettsäurechlorid im gasförmigen Zustand reagieren können, wobei:
- wenigstens auf der Oberfläche des festen Materials (3, 9) wenigstens ein Fettsäurechlorid (1) mittels einer Verteilervorrichtung (2) verteilt wird, die eine Auftragsfläche aufweist, die geeignet ist, das wenigstens eine Fettsäurechlorid (1) wenigstens auf der Oberfläche des festen Materials (3, 9) ausgehend von der Auftragsfläche aufzubringen;
- das mindestens eine Fettsäurechlorids (1), das mindestens auf der Oberfläche des festen Materials (3, 9) verteilt ist, auf eine Temperatur, bezeichnet als Acylierungstemperatur, die niedriger ist als die Verdampfungstemperatur des mindestens einen Fettsäurechlorids (1), derart erhitzt wird, dass eine Acylierung des festen Materials (3, 9) durch Reaktion von mindestens einem Fettsäurechlorid (1) in gasförmigem Zustand mit mindestens einem der reaktogenen Hydroxyle des festen Materials (3, 9) ermöglicht wird, und
- ein Strom einer gasförmigen Zusammensetzung (6) auf das feste Material (3, 9) bei Acylierungstemperatur derart gerichtet wird, dass mindestens ein Teil der gasförmigen Salzsäure (7), die aufgrund der Acylierungsreaktion gebildet wird, gelenkt wird;
**dadurch gekennzeichnet, dass** die Auftragsfläche der Verteilervorrichtung (2) ein Velours ist, der mit fadenförmigen Velourselementen versehen ist, die gegenüber dem mindestens einen Fettsäurechlorid (1) nicht reaktiv sind und die in der Lage sind:
o sich mit dem mindestens einen Fettsäurechlorid (1) durch Kontakt mit dem mindestens einen Fettsäurechlorid zu beladen, und
o das mindestens eine Fettsäurechlorid durch Inkontaktversetzen der fadenförmigen Elemente des Velours mit dem festen Material (3, 9) freizusetzen;
wobei der Schritt (12, 14) des Verteilens so ausgeführt wird, dass auf dem festen Material (3, 9) eine Menge des mindestens einen Fettsäurechlorids (1) zwischen 20 mg^{/}m² und 1 g/m² Oberfläche des festen Materials (3, 9) verteilt wird.

2. Verfahren nach Anspruch 1, **dadurch gekennzeichnet, dass** das mindestens eine Fettsäurechlorid mindestens auf der Oberfläche des festen Materials durch flüchtiges Berühren der Oberfläche des festen Materials durch die freien Längsenden der filigranen Velourselemente der Auftragsfläche verteilt wird.

3. Verfahren nach einem der Ansprüche 1 oder 2, **dadurch gekennzeichnet, dass** die Verteilervorrichtung mindestens eine Auftragswalze umfasst, die die Auftragsfläche darstellt, wobei die mindestens eine Auftragswalze in Bezug auf das feste Material drehbar angebracht ist, und dass das mindestens eine Fettsäurechlorid durch Drehen der mindestens einen Auftragswalze verteilt wird, wobei die Auftragsfläche mit dem festen Material in Kontakt ist.

4. Verfahren nach Anspruch 3, **dadurch gekennzeichnet, dass** das feste Material in Form einer Bahn vorliegt, die vorbeilaufend in einer Vorbeilaufrichtung parallel zur größten Abmessung der Bahn zwischen einer stromaufwärts gelegenen Abwickelvorrichtung der Bahn und einer stromabwärts gelegenen Aufwickelvorrichtung einer Bahn aus acyliertem festem Material angetrieben wird;
- das mindestens eine Fettsäurechlorid kontinuierlich auf mindestens eine freie Oberfläche des vorbeilaufenden festen Materials aufgebracht wird, und
- das mindestens eine Fettsäurechlorid, das auf die Oberfläche des festen Materials aufgetragen wurde, mit Hilfe der Verteilervorrichtung mindestens auf der Oberfläche des festen Materials verteilt wird, und
- das feste Material derart erhitzt wird, dass das mindestens eine Fettsäurechlorid, das mindestens auf der Oberfläche des festen Materials verteilt ist, die Acylierungstemperatur auf dem festen Material erreicht, und
- der Strom der gasförmigen Zusammensetzung in Acylierungstemperatur auf das feste Material gerichtet wird, wodurch das feste Material acyliert wird.

5. Verfahren nach Anspruch 4, **dadurch gekennzeichnet, dass** das mindestens eine Säurechlorid mittels einer Druckvorrichtung kontinuierlich auf mindestens eine der freien Hauptoberflächen des festen Materials aufgebracht wird.

6. Verfahren nach Anspruch 5, **dadurch gekennzeichnet, dass** die Druckvorrichtung aus der Gruppe ausgewählt ist, die aus Flexodruckvorrichtungen und Heliografie-Druckvorrichtungen besteht.

7. Verfahren nach Anspruch 3, **dadurch gekennzeichnet, dass** das feste Material in Form einer Bahn vorliegt, die vorbeilaufend in einer Vorbeilaufrichtung parallel zur größten Abmessung der Bahn zwischen einer stromaufwärts gelegenen Abwickelvorrichtung der Bahn und einer stromabwärts gelegenen Aufwickelvorrichtung einer Bahn aus acyliertem festem Material angetrieben wird;
- das mindestens eine Fettsäurechlorid kontinuierlich auf die rotierend angetriebene Auftragswalze in Kontakt mit dem festen Material aufgebracht wird, wodurch das mindestens eine Fettsäurechlorid von der rotierend angetriebenen Auftragswalze mindestens auf der Oberfläche des festen Materials verteilt wird, und
- das feste Material derart erhitzt wird, dass das mindestens eine Fettsäurechlorid, das mindestens auf der Oberfläche des festen Materials verteilt ist, die Acylierungstemperatur erreicht, und
- der Strom der gasförmigen Zusammensetzung auf Papiermaterial in Acylierungstemperatur gerichtet wird.

8. Verfahren nach Anspruch 7, **dadurch gekennzeichnet, dass** das mindestens eine Fettsäurechlorid auf der rotierend angetriebenen Auftragswalze durch Kontakt der rotierend angetriebenen Auftragswalze mit einer Rasterwalze einer Druckvorrichtung, die mit dem mindestens einen Fettsäurechlorid beladen ist, aufgebracht wird.

9. Verfahren nach einem der Ansprüche 1 bis 8, **dadurch gekennzeichnet, dass** die fadenförmigen Velourselemente aus mindestens einem Material gebildet sind, das aus der Gruppe ausgewählt ist, die aus Keratinfasern, Aramidfasern, Polyesterfasern, Polyamidfasern, Acrylfasern, fluorierten Fasern, Fasern mit einer fluorierten Beschichtung, Mikrofasern, gewebten Mikrofasern, Supermikrofasern und Ultramikrofasern gebildet ist.

10. Verfahren nach einem der Ansprüche 1 bis 3, **dadurch gekennzeichnet, dass** das mindestens eine Säurechlorid auf der Oberfläche des festen Materials mittels einer Verteilervorrichtung aufgebracht wird, die eine Auftragsfläche aufweist, die zuvor mit dem mindestens einen Fettsäurechlorid beladen wurde.

11. Verfahren nach Anspruch 10, **dadurch gekennzeichnet, dass** das feste Material ein Einweg-Papiertaschentuch ist.

12. Verfahren nach einem der Ansprüche 1 bis 11, **dadurch gekennzeichnet, dass** die fadenförmigen Velourselemente eine Länge zwischen 1 mm und 10 mm aufweisen.

13. Verfahren nach einem der Ansprüche 4 bis 12, **dadurch gekennzeichnet, dass** die rotierende Auftragswalze mit einer Drehwinkelgeschwindigkeit rotierend angetrieben wird, die derart gewählt ist, dass die freien Enden der fadenförmigen Velourselemente mit einer linearen Geschwindigkeit eines Wertes rotierend angetrieben werden, der sich vom Wert der Vorbeilaufgeschwindigkeit des festen Materials unterscheidet.

14. Verfahren nach einem der Ansprüche 4 bis 13, **dadurch gekennzeichnet, dass** die rotierende Auftragswalze gemäß einer Drehrichtung rotierend angetrieben wird, die gewählt ist, damit die freien Enden der fadenförmigen Velourselemente gegenläufig zum Vorbeilauf der Bahn des festen Materials angetrieben werden.

15. Verfahren nach einem der Ansprüche 4 bis 13, **dadurch gekennzeichnet, dass** die rotierende Auftragswalze gemäß einer Drehrichtung rotierend angetrieben wird, die gewählt ist, damit die freien Enden der fadenförmigen Velourselemente gleichläufig vorbeilaufend zum Vorbeilauf des festen Materials angetrieben werden.

16. Verfahren nach einem der Ansprüche 1 bis 15, **dadurch gekennzeichnet, dass** die fadenförmigen Velourselemente eine Flexibilität aufweisen, die so gewählt ist, dass das feste Material durch Kontakt mit dem festen Material nicht beschädigt wird.

17. Verfahren nach einem der Ansprüche 1 bis 16, **dadurch gekennzeichnet, dass** das feste Material eine äußere Oberflächenschicht aufweist, die aus Polyvinylalkohol gebildet ist.

18. Verfahren nach einem der Ansprüche 1 bis 17, **dadurch gekennzeichnet, dass** mindestens auf der Oberfläche des festen Materials eine Zusammensetzung, bezeichnet als Acylierungszusammensetzung, verteilt wird, die das mindestens eine Fettsäurechlorid (1) und Acetylchlorid umfasst.

## Claims

1. Process for acylation of a solid material (3, 9) bearing hydroxyls (-OH), referred to as reactogenic hydroxyls, which are accessible and capable of reacting with a fatty acid chloride in the gaseous state, in which:
- at least one fatty acid chloride (1) is distributed at least on the surface of said solid material (3, 9) using a distributor device (2) having an application surface suitable for depositing said at least one fatty acid chloride (1) at least on the surface of said solid material (3, 9) from said application surface;
- said at least one fatty acid chloride (1) distributed at least on the surface of said solid material (3, 9) is heated, at a temperature, referred to as acylation temperature, below the vaporization temperature of said at least one fatty acid chloride (1), so as to enable an acylation of said solid material (3, 9) by reaction of at least one fatty acid chloride (1) in the gaseous state over at least one of said reactogenic hydroxyls of said solid material (3, 9), and;
- a stream of a gaseous composition (6) is directed over said solid material (3, 9) at said acylation temperature, so as to entrain at least one portion of gaseous hydrochloric acid (7) formed by the acylation reaction;
**characterized in that** the application surface of the distributor device (2) is a velvet provided with velvet filiform elements that are non-reactive with respect to said at least one fatty acid chloride (1) and are suitable for:
∘ taking up said at least one fatty acid chloride (1) by contact with said at least one fatty acid chloride, and;
∘ releasing said at least one fatty acid chloride by bringing the filiform elements of the velvet into contact with said solid material (3, 9);
the distribution step (12, 14) being carried out so as to distribute over said solid material (3, 9) an amount of said at least one fatty acid chloride (1) of between 20 mg/m² and 1 g/m² surface area of said solid material (3, 9).

2. Process according to Claim 1, **characterized in that** said at least one fatty acid chloride is distributed at least on the surface of said solid material by brushing of free longitudinal ends of the velvet filiform elements of the application surface over the surface of said solid material.

3. Process according to either of Claims 1 and 2, **characterized in that** the distributor device comprises at least one applicator roller having said application surface, said at least one applicator roller being rotatably mounted with respect to said solid material and **in that** said at least one fatty acid chloride is distributed by rotating said at least one applicator roller, said application surface being in contact with said solid material.

4. Process according to Claim 3, **characterized in that** the solid material being in the form of a strip moved in a run direction parallel to the largest dimension of the strip, between a reel upstream of said strip and a take-up roll downstream of a strip of acylated solid material;
- said at least one fatty acid chloride is deposited continuously on at least one free surface of said moving solid material, and;
- said at least one fatty acid chloride deposited on the surface of said solid material is distributed at least on the surface of said solid material by means of the distributor device, and;
- said solid material is heated so that said at least one fatty acid chloride distributed at least on the surface of said solid material reaches said acylation temperature on said solid material, and;
- the stream of gaseous composition is directed over said solid material at said acylation temperature, whereby said solid material is acylated.

5. Process according to Claim 4, **characterized in that** said at least one acid chloride is deposited continuously on at least one of the free main surfaces of said solid material by means of a printing device.

6. Process according to Claim 5, **characterized in that** the printing device is chosen from the group formed of flexographic printing devices and heliographic printing devices.

7. Process according to Claim 3, **characterized in that** said solid material being in the form of a strip moved in a run direction parallel to the largest dimension of the strip, between a reel upstream of said strip and a take-up roll downstream of a strip of acylated solid material;
- said at least one fatty acid chloride is deposited continuously on the applicator roller rotated in contact with said solid material, whereby said at least one fatty acid chloride is distributed at least on the surface of said solid material from the rotated applicator roller, and;
- said solid material is heated so that said at least one fatty acid chloride distributed at least on the surface of said solid material reaches said acylation temperature, and;
- the stream of gaseous composition is directed over the paper material at said acylation temperature.

8. Process according to Claim 7, **characterized in that** said at least one fatty acid chloride is deposited on the rotated applicator roller, by contact of said rotated applicator roller with an anilox roller of a printing device loaded with said at least one fatty acid chloride.

9. Process according to one of Claims 1 to 8, **characterized in that** the velvet filiform elements are formed of at least one material chosen from the group formed of keratin fibres, aramid fibres, polyester fibres, polyamide fibres, acrylic fibres, fluorinated fibres, fibres provided with a fluorinated coating, microfibres, woven microfibres, super-microfibres and ultra-microfibres.

10. Process according to one of Claims 1 to 3, **characterized in that** said at least one acid chloride is deposited on the surface of said solid material by means of a distributor device having an application surface previously loaded with said at least one fatty acid chloride.

11. Process according to Claim 10, **characterized in that** said solid material is a disposable tissue.

12. Process according to one of Claims 1 to 11, **characterized in that** the velvet filiform elements have a length between 1 mm and 10 mm.

13. Process according to one of Claims 4 to 12, **characterized in that** the rotatable applicator roller is rotated with an angular speed of rotation chosen so that the free ends of the velvet filiform elements are rotated with a linear velocity having a value different from the value of the run speed of said solid material.

14. Process according to one of Claims 4 to 13, **characterized in that** the rotatable applicator roller is rotated in a direction of rotation chosen so that the free ends of the velvet filiform elements are moved countercurrent to the movement of the strip of said solid material.

15. Process according to one of Claims 4 to 13, **characterized in that** the rotatable applicator roller is rotated in a direction of rotation chosen so that the free ends of the velvet filiform elements are moved concurrent to the movement of said solid material.

16. Process according to one of Claims 1 to 15, **characterized in that** the velvet filiform elements have a flexibility chosen so as not to damage said solid material by contact with said solid material.

17. Process according to one of Claims 1 to 16, **characterized in that** said solid material has an outer surface layer formed of polyvinyl alcohol.

18. Process according to one of Claims 1 to 17, **characterized in that** a composition, referred to as acylation composition, comprising said at least one fatty acid chloride (1) and acetyl chloride is distributed at least on the surface of said solid material.
